(19) Europäisches Patentamt
European Patent Office
Office européen des brevets

(11) **EP 4 723 528 A1**

(12) **EUROPEAN PATENT APPLICATION**
published in accordance with Art. 153(4) EPC

(43) Date of publication:
**08.04.2026 Bulletin 2026/15**

(21) Application number: **24814407.3**

(22) Date of filing: **28.05.2024**

(51) International Patent Classification (IPC):
*H04L 5/00* *(2006.01)*

(52) Cooperative Patent Classification (CPC):
**H04L 5/00; H04W 72/231; H04W 72/232**

(86) International application number:
**PCT/CN2024/095645**

(87) International publication number:
**WO 2024/245210 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.05.2023 CN 202310615174**

(71) Applicant: **Apogee Networks, LLC
Plano, TX 75024 (US)**

(72) Inventors:
• **HU, Yang
  Shanghai 201206 (CN)**
• **ZHANG, Xiaobo
  Shanghai 201206 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **METHOD AND APPARATUS USED IN NODE FOR WIRELESS COMMUNICATIONS**

(57) Disclosed in the present application are a method and apparatus used in a node for wireless communications. A first receiver receives first RRC signaling and a first information block; and the first receiver receives first signaling in a first PDCCH, wherein the first signaling comprises G bit sets, and a first bit set is one of the G bit sets. The G bit sets are mapped to G symbol groups on a one-to-one basis, and a first symbol group is a symbol group, to which the first bit set is mapped, among the G symbol groups; a condition that a first-type transmission, which occupies at least one symbol in the first symbol group, is cancelled is based on at least one bit in the first bit set, wherein the first-type transmission is an uplink transmission; and any one of the G symbol groups comprises at least one first-type symbol, and whether at least one symbol, which is indicated to be a downlink symbol by the first RRC signaling, is a first-type symbol depends on the first information block.

FIG. 1

## Description

## Technical Field

The present application relates to a transmission method and apparatus in a wireless communication system, in particular to a transmission method and apparatus for wireless signals in a wireless communication system supporting a cellular network.

## Background Art

Realizing cancellation of an uplink transmission by indicating signaling is an effective means to improve the performance of uplink multi-service multiplexing between users.

## Summary of the Invention

When a symbol indicated to be a downlink symbol by one piece of RRC signaling may belong to different types of symbols, how to enhance a function of cancelling an uplink transmission is an important issue that needs to be considered; and the present application discloses a solution for the above problem. The present application can be applied to various wireless communication scenarios, such as scenarios supporting full-duplex communication, scenarios only supporting half-duplex communication, eMBB (Enhanced Mobile Broadband), URLLCs (Ultra-Reliable Low-Latency Communications), Internet of Vehicles, Internet of Things, and NTNs (Non-Terrestrial Networks), and achieves similar technical effects. In addition, using a unified solution for different scenarios (including but not limited to scenarios supporting full-duplex communications, scenarios only supporting half-duplex communications, eMBB, URLLCs, Internet of Vehicles, Internet of Things, and NTNs) also helps reduce hardware complexity and costs, or improve performance. In the absence of conflicts, embodiments and features in the embodiments in any node of the present application can be applied to any other node. In the absence of conflicts, the embodiments and features in the embodiments of the present application can be arbitrarily combined with each other.

As one embodiment, interpretations of terminologies in the present application refer to definitions of TS38 series of the standard protocol of 3GPP.

As one embodiment, the interpretations of the terminologies in the present application refer to definitions of TS37 series of the standard protocol of 3GPP.

The present application discloses a method used in a first node for wireless communications, characterized by comprising:

receiving first RRC signaling and a first information block, wherein at least one symbol is indicated to be a downlink symbol by the first RRC signaling; and
receiving first signaling in a first PDCCH, wherein the first signaling comprises G bit sets, a first bit set is one of the G bit sets, and G is a positive integer greater than 1,
wherein the G bit sets are mapped to G symbol groups on a one-to-one basis, and a first symbol group is a symbol group, to which the first bit set is mapped, among the G symbol groups; a condition that a first-type transmission, which occupies at least one symbol in the first symbol group, is cancelled is based on at least one bit in the first bit set, wherein the first-type transmission is an uplink transmission; any one of the G symbol groups comprises at least one first-type symbol, and whether at least one symbol, which is indicated to be a downlink symbol by the first RRC signaling, belongs to the first-type symbol depends on the first information block; and the first PDCCH is used for determining the G symbol groups.

As one embodiment, the problem to be solved by the present application comprises: how to define the first-type symbol to determine the G symbol groups.

As one embodiment, the problem to be solved by the present application comprises: after configuring a symbol indicated to be a downlink symbol by the first RRC signaling and belonging to the first-type symbol, how to determine a symbol group to which the first bit set is mapped, so as to realize a function of cancelling the first-type transmission according to bit(s) in the first bit set.

As one embodiment, the problem to be solved by the present application comprises: what is a relationship between symbols comprised in a symbol group to which the first bit set is mapped and the first information block.

As one embodiment, the problem to be solved by the present application comprises: how to improve flexibility of uplink scheduling.

As one embodiment, the problem to be solved by the present application comprises: when one/some symbol(s) indicated to be a downlink symbol(s) by the first RRC signaling is/are configured to be available for an uplink transmission by the first information block, how to efficiently realize a function of cancelling the uplink transmission that occupies this/these symbol(s).

As one embodiment, the problem to be solved by the present application comprises: how to improve utilization efficiency of bits in the first signaling.

As one embodiment, benefits of the above method comprise: helping to improve an uplink capacity.

As one embodiment, the benefits of the above method comprise: helping to realize the cancellation of an uplink transmission that occupies a symbol indicated to be a downlink symbol by the first RRC signaling and belonging to the first-type symbol, and improving flexibility of uplink scheduling.

As one embodiment, the benefits of the above method comprise: enhancing a function of cancelling an uplink transmission, and helping to improve system resource assignment.

As one embodiment, the benefits of the above method comprise: having good compatibility for existing 3GPP technical specifications.

According to one aspect of the present application, the above method is characterized in that,

T symbols are divided into the G symbol groups, the T symbols all belong to the first-type symbol, the first PDCCH is used for determining a first symbol in the T symbols, and T is configurable.

As one embodiment, the benefits of the above method comprise: having higher bit utilization efficiency in the aspect of realizing cancellation of an uplink transmission that occupies the first-type symbol.

According to one aspect of the present application, the above method is characterized in that,

the first symbol in the T symbols is determined to be a first symbol after a first duration from the end of the first PDCCH, and the first duration is related to a PUSCH preparation time.

According to one aspect of the present application, the above method is characterized in that,

the first RRC signaling is tdd-UL-DL-ConfigurationCommon.

As one embodiment, the benefits of the above method comprise: having good compatibility with existing 3GPP technical specifications.

As one embodiment, the benefits of the above method comprise: helping to realize the cancellation of an uplink transmission that occupies a symbol indicated to be a downlink symbol by tdd-UL-DL-Configuration-Common and belonging to the first-type symbol, and improving flexibility of uplink scheduling.

According to one aspect of the present application, the above method is characterized in that,

the first signaling is a DCI format 2_4.

As one embodiment, the benefits of the above method comprise: enhancing a function of cancelling an uplink transmission in the DCI format 2_4.

According to one aspect of the present application, the above method is characterized in that,

a target uplink transmission belongs to the first-type transmission and the first symbol group comprises one symbol occupied by the target uplink transmission; when a first condition is satisfied, the target uplink transmission is cancelled; and the first condition comprises: the first bit set comprises at least one bit with a value of 1.

According to one aspect of the present application, the above method is characterized in that,

the target uplink transmission is a PUSCH transmission or an SRS transmission.

According to one aspect of the present application, the above method is characterized in that,

the first-type symbol is a symbol other than a second-type symbol; and a symbol other than a symbol configured to be available for an uplink transmission by the first information block and indicated to be a downlink symbol by the first RRC signaling belongs to the second-type symbol.

As one embodiment, the benefits of the above method comprise: helping to avoid the G symbol groups from comprising invalid symbols, thereby improving utilization efficiency of bits in the first signaling.

According to one aspect of the present application, the above method is characterized in that,

a symbol configured to be available for a full-duplex operation by the first information block and indicated to be a downlink symbol by the first RRC signaling belongs to the first-type symbol.

As one embodiment, the problem to be solved by the present application comprises: after a symbol available for a full-duplex operation is introduced, how to improve signaling design to realize an indication by the first signaling for cancelling the first-type transmission that occupies a symbol indicated to be a downlink symbol by the first RRC signaling and available for a full-duplex operation.

As one embodiment, the benefits of the above method comprise: being able to effectively realize the cancellation of an uplink transmission that occupies a symbol available for a full-duplex operation, and helping to optimize resource assignment on the symbol available for the full-duplex operation.

As one embodiment, the benefits of the above method comprise: helping to realize the cancellation of an uplink transmission that occupies a symbol indicated to be a downlink symbol by the first RRC signaling and available for a full-duplex operation, and improving flexibility of uplink scheduling.

As one embodiment, the benefits of the above method comprise: enhancing a function of cancelling an uplink transmission by the first signaling.

The present application discloses a method used in a second node for wireless communications, characterized by comprising:

sending first RRC signaling and a first information block, wherein at least one symbol is indicated to be a downlink symbol by the first RRC signaling; and sending first signaling in a first PDCCH, wherein the first signaling comprises G bit sets, a first bit set is one of the G bit sets, and G is a positive integer greater than 1,
wherein the G bit sets are mapped to G symbol groups on a one-to-one basis, and a first symbol group is a symbol group, to which the first bit set is mapped, among the G symbol groups; a condition that a first-type transmission, which occupies at least one symbol in the first symbol group, is cancelled is based on at least one bit in the first bit set, wherein the first-type transmission is an uplink transmission; any one of the G symbol groups comprises at least one first-type symbol, and whether at least one symbol, which is indicated to be a downlink symbol by the first RRC signaling, belongs to the first-type symbol depends on the first information block; and the first PDCCH is used for determining the G symbol groups.

According to one aspect of the present application, the above method is characterized in that, T symbols are divided into the G symbol groups, the T symbols all belong to the first-type symbol, the first PDCCH is used for determining a first symbol in the T symbols, and T is configurable.

According to one aspect of the present application, the above method is characterized in that, the first symbol in the T symbols is determined to be a first symbol after a first duration from the end of the first PDCCH, and the first duration is related to a PUSCH preparation time.

According to one aspect of the present application, the above method is characterized in that, the first RRC signaling is tdd-UL-DL-ConfigurationCommon.

According to one aspect of the present application, the above method is characterized in that, the first signaling is a DCI format 2_4.

According to one aspect of the present application, the above method is characterized in that, a target uplink transmission belongs to the first-type transmission and the first symbol group comprises one symbol occupied by the target uplink transmission; when a first condition is satisfied, the target uplink transmission is cancelled; and the first condition comprises: the first bit set comprises at least one bit with a value of 1.

According to one aspect of the present application, the above method is characterized in that, the target uplink transmission is a PUSCH transmission or an SRS transmission.

According to one aspect of the present application, the above method is characterized in that, the first-type symbol is a symbol other than a second-type symbol; and a symbol other than a symbol configured to be available for an uplink transmission by the first information block and indicated to be a downlink symbol by the first RRC signaling belongs to the second-type symbol.

According to one aspect of the present application, the above method is characterized in that, a symbol configured to be available for a full-duplex operation by the first information block and indicated to be a downlink symbol by the first RRC signaling belongs to the first-type symbol.

The present application discloses a first node used for wireless communications, characterized by comprising:

a first receiver receiving first RRC signaling and a first information block, wherein at least one symbol is indicated to be a downlink symbol by the first RRC signaling; and
the first receiver receiving first signaling in a first PDCCH, wherein the first signaling comprises G bit sets, a first bit set is one of the G bit sets, and G is a positive integer greater than 1,
wherein the G bit sets are mapped to G symbol groups on a one-to-one basis, and a first symbol group is a symbol group, to which the first bit set is mapped, among the G symbol groups; a condition that a first-type transmission, which occupies at least one symbol in the first symbol group, is cancelled is based on at least one bit in the first bit set, wherein the first-type transmission is an uplink transmission; any one of the G symbol groups comprises at least one first-type symbol, and whether at least one symbol, which is indicated to be a downlink symbol by the first RRC signaling, belongs to the first-type symbol depends on the first information block; and the first PDCCH is used for determining the G symbol groups.

The present application discloses a second node used for wireless communications, characterized by comprising:

a second transmitter sending first RRC signaling and a first information block, wherein at least one symbol is indicated to be a downlink symbol by the first RRC signaling; and
the second transmitter sending first signaling in a first PDCCH, wherein the first signaling comprises G bit sets, a first bit set is one of the G bit sets, and G is a positive integer greater than 1,
wherein the G bit sets are mapped to G symbol groups on a one-to-one basis, and a first symbol group is a symbol group, to which the first bit set is mapped, among the G symbol groups; a condition that a first-type transmission, which occupies at least one symbol in the first symbol group, is cancelled is based on at least one bit in the first bit set, wherein the first-type transmission is an uplink transmission; any one of the G symbol groups comprises at least one first-type symbol, and whether at least one symbol, which is indicated to be a downlink symbol by the first RRC signaling, belongs to the first-type symbol depends on the first information block; and the first PDCCH is used for determining the G symbol groups.

Brief Description of the Drawings

Other features, purposes and advantages of the present application will become more apparent by reading the detailed description of the non-limiting embodiments with reference to the following drawings:

FIG. 1 shows a processing flow chart of a first node according to one embodiment of the present application;
FIG. 2 shows a schematic diagram of a network architecture according to one embodiment of the present application;

FIG. 3 shows a schematic diagram of a wireless protocol architecture of a user plane and a control plane according to one embodiment of the present application;

FIG. 4 shows a schematic diagram of a first communication device and a second communication device according to one embodiment of the present application;

FIG. 5 shows a flow chart of a signal transmission according to one embodiment of the present application;

FIG. 6 shows a schematic diagram of a relationship among G symbol groups, T symbols, and a first PDCCH according to one embodiment of the present application;

FIG. 7 shows a schematic diagram explaining a first symbol after a first duration from the end of a first PDCCH according to one embodiment of the present application;

FIG. 8 shows a schematic diagram of a relationship between symbols indicated to be downlink symbols by first RRC signaling and a first-type symbol according to one embodiment of the present application;

FIG. 9 shows a schematic diagram explaining a first-type symbol according to one embodiment of the present application;

FIG. 10 shows a schematic diagram explaining a condition that a target uplink transmission is cancelled according to one embodiment of the present application;

FIG. 11 shows a structural block diagram of a processing apparatus in a first node device according to one embodiment of the present application; and

FIG. 12 shows a structural block diagram of a processing apparatus in a second node device according to one embodiment of the present application.

## Detailed Description of Embodiments

The technical solution of the present application will be further described in detail below in conjunction with the drawings. It should be noted that, in the absence of conflicts, embodiments and the features in the embodiments of the present application can be arbitrarily combined with each other.

## Embodiment 1

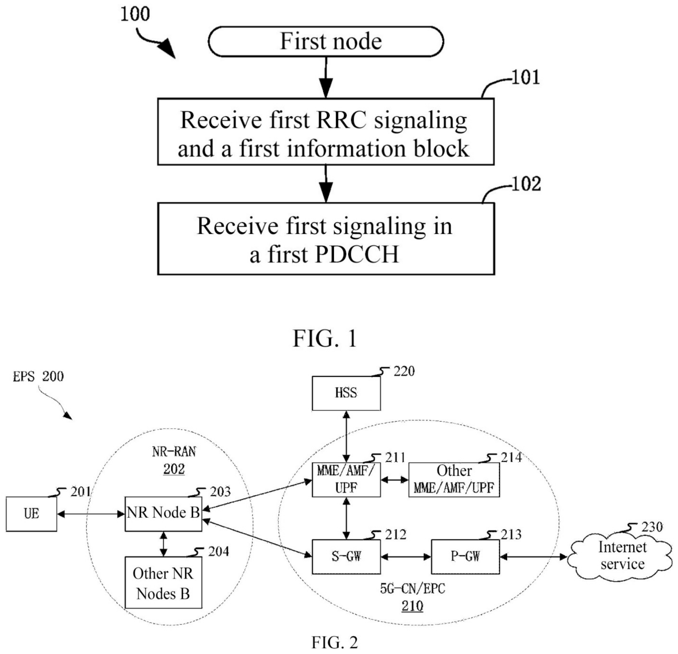

Embodiment 1 illustrates a processing flow chart of a first node according to one embodiment of the present application, as shown in FIG. 1.

In Embodiment 1, the first node in the present application receives first RRC signaling and a first information block in step 101; and receives first signaling in a first PDCCH in step 102.

In Embodiment 1, at least one symbol is indicated by the first RRC signaling to be a downlink symbol;

the first signaling comprises G bit sets, a first bit set is one of the G bit sets, and G is a positive integer greater than 1; the G bit sets are mapped to G symbol groups on a one-to-one basis, and a first symbol group is a symbol group, to which the first bit set is mapped, among the G symbol groups; a condition that a first-type transmission, which occupies at least one symbol in the first symbol group, is cancelled is based on at least one bit in the first bit set, wherein the first-type transmission is an uplink transmission; any one of the G symbol groups comprises at least one first-type symbol, and whether at least one symbol, which is indicated to be a downlink symbol by the first RRC signaling, belongs to the first-type symbol depends on the first information block; and the first PDCCH is used for determining the G symbol groups.

As one embodiment, the first RRC signaling comprises at least one field in at least one IE (Information Element).

As one embodiment, the first RRC signaling is one IE.

As one embodiment, the first RRC signaling is one field in one IE.

As one embodiment, the first RRC signaling is one RRC IE.

As one embodiment, the first RRC signaling comprises one RRC parameter.

As one embodiment, the first RRC signaling comprises time-domain configuration information.

As one embodiment, the first RRC signaling comprises TDD (Time Division Duplexing) configuration information of a UL/DL (Uplink/Downlink).

As one embodiment, the first RRC signaling comprises tdd-UL-DL-ConfigurationCommon.

As one embodiment, the first RRC signaling comprises tdd-UL-DL-ConfigurationDedicated.

As one embodiment, the first RRC signaling comprises tdd-UL-DL-ConfigurationCommon and tdd-UL-DL-ConfigurationDedicated.

As one embodiment, the first RRC signaling is tdd-UL-DL-ConfigurationCommon.

As one embodiment, the first RRC signaling is tdd-UL-DL-ConfigurationDedicated.

As one embodiment, a name of the first RRC signaling comprises tdd-UL-DL-ConfigurationCommon.

As one embodiment, the name of the first RRC signaling comprises tdd-UL-DL-ConfigurationDedicated.

As one embodiment, the first information block comprises physical layer signaling.

As one embodiment, the first information block comprises DCI (Downlink Control Information).

As one embodiment, the first information block comprises at least one field in one DCI format.

As one embodiment, benefits of the above method comprise: improving the transmission timeliness of information comprised in the first information block.

As one embodiment, the first information block comprises higher layer signaling.

As one embodiment, the first information block comprises a MAC CE (Medium Access Control Layer Control Element).

As one embodiment, the first information block comprises RRC (Radio Resource Control) signaling.

As one embodiment, the first information block comprises at least one field in at least one IE (Information Element).

As one embodiment, the benefits of the above method comprise: improving the transmission reliability of information comprised in the first information block.

As one embodiment, the first information block is DCI.

As one embodiment, the first information block is one field in one DCI format.

As one embodiment, the first information block is one MAC CE.

As one embodiment, the first information block is one field in one MAC CE.

As one embodiment, the first information block is one RRC IE.

As one embodiment, the first information block is one field in one IE.

As one embodiment, the first information block is RRC signaling.

As one embodiment, a name of the first information block comprises subband.

As one embodiment, the name of the first information block comprises SBFD.

As one embodiment, the first information block comprises configuration information for at least one frequency band resource.

As one embodiment, the first information block comprises configuration information of time domain resources.

As one embodiment, the first information block comprises configuration information of symbol types.

As one embodiment, the first information block comprises configuration information of resources for full-duplex operations.

As one embodiment, the first information block comprises configuration information of resources for a full-duplex mode.

As one embodiment, the first information block does not comprise tdd-UL-DL-ConfigurationCommon.

As one embodiment, the first information block is RRC signaling other than the first RRC signaling.

As one embodiment, the first RRC signaling is used for indicating a link direction of at least 1 symbol.

As one embodiment, the link direction comprises a downlink and an uplink.

As one embodiment, the first signaling is physical layer signaling.

As one embodiment, the first signaling is DCI.

As one embodiment, the first signaling is a DCI format with a CI-RNTI, and the CI-RNTI is an RNTI (Radio Network Temporary Identifier) used for indicating cancellation of an uplink transmission.

As one embodiment, the benefits of the above method comprise: improving an existing DCI format with a CI-RNTI of 3GPP, and concisely and effectively realizing a function of cancelling an uplink transmission on a symbol indicated to be a downlink symbol by the first RRC signaling and belonging to the first-type symbol.

As one embodiment, the benefits of the above method comprise: making full use of existing content defined for a DCI format with a CI-RNTI, requiring less workload for signaling design, and having good compatibility.

As one embodiment, the first signaling is a DCI format 2_4.

As one embodiment, the benefits of the above method comprise: improving an existing DCI format 2_4 of 3GPP for cancelling an uplink transmission, and concisely and effectively realizing a function of cancelling the uplink transmission on a symbol indicated to be a downlink symbol by the first RRC signaling and belonging to the first-type symbol.

As one embodiment, the benefits of the above method comprise: making full use of existing content defined for the DCI format 2_4, requiring less workload for signaling design, and having good compatibility.

As one embodiment, a CRC (Cyclic redundancy check) carried by the first signaling is scrambled by a CI-RNTI.

As one embodiment, the first signaling is signaling comprising at least one cancellation indication.

As one embodiment, the first signaling is signaling that notifies a PRB (Physical resource block) and OFDM ((Orthogonal frequency division multiplex), Cyclic prefix orthogonal frequency division multiplex) symbol.

As one embodiment, the first signaling is detected in the first PDCCH (Physical downlink control channel).

As one embodiment, the first signaling comprises a first field, the number of bits comprised in the first field (a size of the first field) is N, and N is configurable; and all bits in the G bit sets are bits in the first field, and each bit set among the G bit sets comprises N/G bits.

As one embodiment, bits ordered higher in the first field are comprised in a bit set with a smaller index among the G bit sets.

As one embodiment, bits ordered higher in the first field are comprised in a bit set with a larger index among the G bit sets.

As one embodiment, the first field is for one serving cell.

As one embodiment, the first field is one cancellation indication.

As one embodiment, the benefits of the above method comprise: improving an existing definition of a cancellation indication of 3GPP, and concisely and effectively realizing a function of cancelling an uplink transmission on a symbol indicated to be a downlink symbol by the first RRC signaling and belonging to the first-type symbol.

As one embodiment, the benefits of the above method comprise: making full use of existing content defined by 3GPP for a cancellation instruction, requiring less workload for signaling design, and having good compatibility.

As one embodiment, N is configured by RRC signaling.

As one embodiment, N is configured by ci-PayloadSize.

As one embodiment, G is configurable.

As one embodiment, G is configured by RRC signaling.

As one embodiment, G is configured by timeGranularityforCI in timeFrequencyRegion.

As one embodiment, G is equal to 2.

As one embodiment, G is equal to 4.

As one embodiment, G is equal to 7.

As one embodiment, G is equal to 14.

As one embodiment, G is equal to 28.

As one embodiment, each bit set among the G bit sets comprises at least one bit in the first signaling.

As one embodiment, which bits in the first signaling are comprised in each bit set among the G bit sets are determined according to a pre-defined rule.

As one embodiment, the G bit sets are configurable.

As one embodiment, the number of bits comprised in a bit set with a smallest index among the G bit sets is configured by RRC signaling, and the number of bits comprised in the remaining bit sets among the G bit sets is increased in sequence in the order of indexes from small to large.

As one embodiment, the number of bits comprised in any 2 bit sets among the G bit sets is equal.

As one embodiment, any 2 bit sets among the G bit sets have no intersection.

As one embodiment, each bit in the G bit sets is a bit in the first signaling.

As one embodiment, the first bit set is any bit set among the G bit sets.

As one embodiment, the G bit sets and the G symbol groups are mapped on a one-to-one basis in the order of bit set indexes from small to large and symbol group indexes from small to large.

As one embodiment, the G bit sets and the G symbol groups are mapped on a one-to-one basis in the order of bit set indexes from small to large and symbol group indexes from large to small.

As one embodiment, a mapping relationship between the G bit sets and the G symbol groups is pre-defined.

As one embodiment, the benefits of the above method comprise: reducing processing complexity of UE.

As one embodiment, the mapping relationship between the G bit sets and the G symbol groups is configurable.

As one embodiment, the mapping relationship between the G bit sets and the G symbol groups is configured by RRC signaling.

As one embodiment, when the first symbol group comprises at least one symbol occupied by one of the first-type transmissions, the first-type transmission occupies at least one symbol in the first symbol group.

As one embodiment, when there exists at least one symbol in the first symbol group that overlaps with a symbol occupied by one of the first-type transmissions in a time domain, the first-type transmission occupies at least one symbol in the first symbol group.

As one embodiment, for any first-type transmission that occupies at least one symbol in the first symbol group, the at least one symbol occupied is comprised in the first symbol group.

As one embodiment, for any first-type transmission that occupies at least one symbol in the first symbol group, the at least one symbol occupied overlaps with one symbol in the first symbol group in a time domain.

As one embodiment, a first condition is a condition that the first-type transmission that occupies at least one symbol in the first symbol group is cancelled, and the first condition comprises: the first bit set comprises at least one bit with a value of 1.

As one embodiment, the first condition is a condition that the first-type transmission that occupies at least one symbol in the first symbol group is cancelled, the first condition comprises a plurality of sub-conditions, and one of the plurality of sub-conditions is: the first bit set comprises at least one bit with a value of 1.

As one embodiment, for a condition comprising the plurality of sub-conditions, only when the plurality of comprised sub-conditions are all satisfied, this condition is satisfied.

As one embodiment, the meaning of an expression of "a condition that a first-type transmission, which occupies at least one symbol in the first symbol group, is cancelled is based on at least one bit in the first bit set" is: whether the first-type transmission, which occupies at least one symbol in the first symbol group, is cancelled depends on at least one bit in the first bit set.

As one embodiment, the meaning of the expression of "a condition that a first-type transmission, which occupies at least one symbol in the first symbol group, is cancelled is based on at least one bit in the first bit set" comprises: whether the first-type transmission, which occupies at least one symbol in the first symbol group, is cancelled depends on at least one bit in the first bit set.

As one embodiment, the meaning of the expression of "a condition that a first-type transmission, which occupies at least one symbol in the first symbol group, is cancelled is based on at least one bit in the first bit set" is: at least one bit in the first bit set is a bit related to the cancellation of the first-type transmission; a target uplink transmission belongs to the first-type transmission and the first symbol group comprises one symbol occupied by the target uplink transmission; when the first condition is satisfied, the target uplink transmission is cancelled; and the first condition comprises: the first bit set comprises at least one bit with a value of 1.

As one embodiment, the meaning of the expression of "a condition that a first-type transmission, which occupies at least one symbol in the first symbol group, is cancelled is based on at least one bit in the first bit set" comprises:

at least one bit in the first bit set is a bit related to the cancellation of the first-type transmission; the target uplink transmission belongs to the first-type transmission and the first symbol group comprises one symbol occupied by the target uplink transmission; when the first condition is satisfied, the target uplink transmission is cancelled; and the first condition comprises: the first bit set comprises at least one bit with a value of 1.

As one embodiment, the meaning of the expression of "a condition that a first-type transmission, which occupies at least one symbol in the first symbol group, is cancelled is based on at least one bit in the first bit set" is: at least one bit in the first bit set is a bit related to the cancellation of the first-type transmission; the target uplink transmission belongs to the first-type transmission and at least one symbol in the first symbol group overlaps with one symbol occupied by the target uplink transmission in a time domain; when the first condition is satisfied, the target uplink transmission is cancelled; and the first condition comprises: the first bit set comprises at least one bit with a value of 1.

As one embodiment, the meaning of the expression of "a condition that a first-type transmission, which occupies at least one symbol in the first symbol group, is cancelled is based on at least one bit in the first bit set" comprises:

at least one bit in the first bit set is a bit related to the cancellation of the first-type transmission; the target uplink transmission belongs to the first-type transmission and at least one symbol in the first symbol group overlaps with one symbol occupied by the target uplink transmission in a time domain; when the first condition is satisfied, the target uplink transmission is cancelled; and the first condition comprises: the first bit set comprises at least one bit with a value of 1.

As one embodiment, the meaning of the expression of "a condition that a first-type transmission, which occupies at least one symbol in the first symbol group, is cancelled is based on at least one bit in the first bit set" is: a plurality of bits in the first bit set indicate a plurality of numerical values, respectively; and only when the sum of the plurality of numerical values is greater than 12.66 and the product of the plurality of numerical values is greater than 57, the first-type transmission that occupies at least one symbol in the first symbol group is cancelled.

As one embodiment, the meaning of an expression of "the first-type transmission is an uplink transmission" is: the first-type transmission belongs to an uplink transmission.

As one embodiment, the first-type transmission comprises a PUSCH (Physical uplink shared channel) transmission.

As one embodiment, the first-type transmission comprises one repetition of a PUSCH transmission.

As one embodiment, the benefits of the above method comprise: helping to realize the cancellation of a PUSCH transmission.

As one embodiment, the first-type transmission comprises an uplink transmission other than a PUSCH transmission.

As one embodiment, the first-type transmission comprises an SRS transmission.

As one embodiment, the benefits of the above method comprise: helping to realize the cancellation of an SRS transmission.

As one embodiment, the first-type transmission comprises an uplink transmission other than an SRS transmission.

As one embodiment, the first-type transmission comprises an uplink transmission other than a PUSCH transmission and an SRS transmission.

As one embodiment, the first-type transmission does not comprise an uplink transmission other than a PUSCH transmission and an SRS transmission.

As one embodiment, the benefits of the above method comprise: helping to ensure reliability of a PUCCH transmission or a PRACH transmission.

As one embodiment, either (one repetition of) a PUSCH transmission or an SRS transmission belongs to the first-type transmission.

As one embodiment, one of the first-type transmissions is: one of (one repetition of) a PUSCH transmission or an SRS transmission.

As one embodiment, which symbols are comprised in one of the G symbol groups is configurable.

As one embodiment, one of the G symbol groups comprises at least one symbol indicated to be a downlink symbol by the first RRC signaling.

As one embodiment, one of the G symbol groups comprises one symbol that does not belong to the first-type symbol.

As one embodiment, one of the G symbol groups comprises only one symbol that belongs to the first-type symbol.

As one embodiment, one of the G symbol groups comprises a plurality of symbols that belong to the first-type symbol.

As one embodiment, in order to determine the G symbol groups, the first node excludes symbol(s) other than the first-type symbol.

As one embodiment, all symbols in the G symbol groups belong to the first-type symbol.

As one embodiment, the benefits of the above method comprise: helping to efficiently realize a function of cancelling an uplink transmission that occupies the first-type symbol.

As one embodiment, the benefits of the above method comprise: having higher bit utilization efficiency.

As one embodiment, the meaning of an expression of "any one of the G symbol groups comprises at least one first-type symbol" is: T symbols are divided into the G symbol groups, the T symbols all belong to the first-type symbol, and the first PDCCH is used for determining a first symbol in the T symbols.

As one embodiment, a duration of any symbol in the G symbol groups is determined according to an SCS (Subcarrier spacing) configuration of one active downlink BWP (Bandwidth part), and the first node monitors a PDCCH for detecting the DCI format 2_4 on the one active downlink BWP.

As one embodiment, the meaning of an expression of "whether at least one symbol, which is indicated to be a downlink symbol by the first RRC signaling, belongs to the first-type symbol depends on the first information block" is: whether one symbol indicated to be a downlink symbol by the first RRC signaling belongs to the first-type symbol depends on the first information block.

As one embodiment, the meaning of the expression of "whether at least one symbol, which is indicated to be a downlink symbol by the first RRC signaling, belongs to the first-type symbol depends on the first information block" is: whether a plurality of symbols indicated to be downlink symbols by the first RRC signaling belong to the first-type symbol depends on the first information block.

As one embodiment, the first information block is used for determining whether one or more symbols indicated to be downlink symbols by the first RRC signaling belong to the first-type symbol.

As one embodiment, whether one or more symbols indicated to be downlink symbols by the first RRC signaling belong to the first-type symbol is determined by a configuration of the first information block.

As one embodiment, a symbol other than a symbol configured to be available for a full-duplex operation by the first information block and indicated to be a downlink symbol by the first RRC signaling does not belong to the first-type symbol.

As one embodiment, a symbol configured to be available for a full-duplex operation by the first information block and indicated to be a downlink symbol by the first RRC signaling belongs to the first-type symbol.

As one embodiment, a symbol other than a symbol configured for a full-duplex mode by the first information block and indicated to be a downlink symbol by the first RRC signaling does not belong to the first-type symbol.

As one embodiment, a symbol configured for a full-duplex mode by the first information block and indicated to be a downlink symbol by the first RRC signaling belongs to the first-type symbol.

As one embodiment, the benefits of the above method comprise: helping to support full-duplex operations.

As one embodiment, the first information block comprises one bit sequence, each bit in this bit sequence is mapped onto at least one symbol, and symbols that correspond to one bit set to 0 in this bit sequence and are indicated to be downlink symbols by the first RRC signaling belong to the first-type symbol.

As one sub-embodiment of the above embodiment, symbols that correspond to one bit set to 1 in this bit sequence and are indicated to be downlink symbols by the first RRC signaling do not belong to the first-type symbol.

As one embodiment, the first information block comprises one bit sequence, each bit in this bit sequence is mapped onto at least one symbol, and symbols that correspond to one bit set to 1 in this bit sequence and are indicated to be downlink symbols by the first RRC signaling belong to the first-type symbol.

As one sub-embodiment of the above embodiment, symbols that correspond to one bit set to 0 in this bit sequence and are indicated to be downlink symbols by the first RRC signaling do not belong to the first-type symbol.

As one embodiment, when a first symbol is indicated to be a downlink symbol by the first RRC signaling and is a symbol explicitly indicated by the first information block, the first symbol belongs to the first-type symbol.

As one embodiment, one symbol in the present application is a time domain symbol.

As one embodiment, one symbol in the present application is an OFDM (Orthogonal frequency division multiplex) symbol.

As one embodiment, one symbol in the present application is a symbol in a slot.

As one embodiment, one symbol in the present application comprises one duration in a time domain.

As one embodiment, T symbols are divided into the G symbol groups, and the T symbols all belong to the first-type symbol; and the meaning of an expression of "the first PDCCH is used for determining the G symbol groups" is: the first symbol in the T symbols depends on the first PDCCH.

As one embodiment, the determination of the T symbols depends on the first PDCCH.

As one embodiment, the number of PRBs occupied by the first PDCCH in a frequency domain implicitly indicates time domain positions of the first-type symbol comprised in each of the G symbol groups.

As one embodiment, an index of a slot in which the first PDCCH is located in a time domain implicitly indicates the distribution of the first-type symbol comprised in each of the G symbol groups within one system frame.

## Embodiment 2

Embodiment 2 illustrates a schematic diagram of one network architecture according to the present application, as shown in FIG. 2.

FIG. 2 illustrates a diagram of a network architecture 200 of a 5G NR, LTE (Long-Term Evolution) and LTE-A (Long-Term Evolution Advanced) systems. The 5G NR or LTE network architecture 200 may be referred to as EPS (Evolved Packet System) 200 or some other suitable terminologies. The EPS 200 may comprise one or more pieces of UE (User Equipment) 201, an NG-RAN (Next Generation Radio Access Network) 202, an EPC (Evolved Packet Core)/5G-CN (5G-Core Network) 210, an HSS (Home Subscriber Server) 220, and an Internet service 230. The EPS may be interconnected with other access networks, but these entities/interfaces are not shown for simplicity. As shown in the figure, the EPS provides packet switching services. However, those skilled in the art will readily appreciate that the various concepts presented throughout the present application may be extended to networks providing circuit switching services or other cellular networks. The NG-RAN comprises an NR Node B (gNB) 203 and other gNBs 204. The gNB203 provides user and control plane protocol termination toward the UE201. The gNB203 may be connected to other gNBs 204 via an Xn interface (e.g., backhaul). The gNB203 may also be referred to as a base station, a base station transceiving station, a radio base station, a radio transceiving device, a transceiving device function, a basic service set (BSS), an extended service set (ESS), a TRP (Transmitter Receiver Point), or some other suitable terminologies. The gNB203 provides an access point to the EPC/5G-CN 210 for the UE201. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatus. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the EPC/5G-CN 210 by an S1/NG interface. The EPC/5G-CN 210 comprises an MME (Mobility Management Entity)/AMF (Authentication Management Field)/UPF (User Plane Function) 211, other MME/AMF/UPF214, an S-GW (Service Gateway) 212, and a P-GW (Packet Data Network Gateway) 213. The MME/AMF/UPF211 is a control node that processes signaling between the UE201 and the EPC/5G-CN 210. Generally, the MME/AMF/UPF211 provides bearer and connection management. All user IP (Internet Protocol) packets are transmitted through the S-GW212, wherein the S-GW212 itself is connected to the P-GW213. The P-GW213 provides UE IP address assignment and other functions. The P-GW213 is connected to the Internet service 230. The Internet service 230 comprises operator-corresponding Internet protocol services, which may specifically comprise the Internet, an Intranet, an IMS (IP Multimedia Subsystem) and packet switching streaming services.

As one embodiment, the UE201 corresponds to a first node in the present application.

As one embodiment, the gNB203 corresponds to a second node in the present application.

As one embodiment, the UE201 corresponds to the first node in the present application, and the gNB203 corresponds to the second node in the present application.

As one embodiment, the gNB203 is a Macro-Cellular base station.

As one embodiment, the gNB203 is a Micro Cell base station.

As one embodiment, the gNB203 is a PicoCell base station.

As one embodiment, the gNB203 is a Femtocell.

As one embodiment, the gNB203 is a base station device that supports large latency differences.

As one embodiment, the gNB203 is one flying platform device.

As one embodiment, the gNB203 is a satellite device.

## Embodiment 3

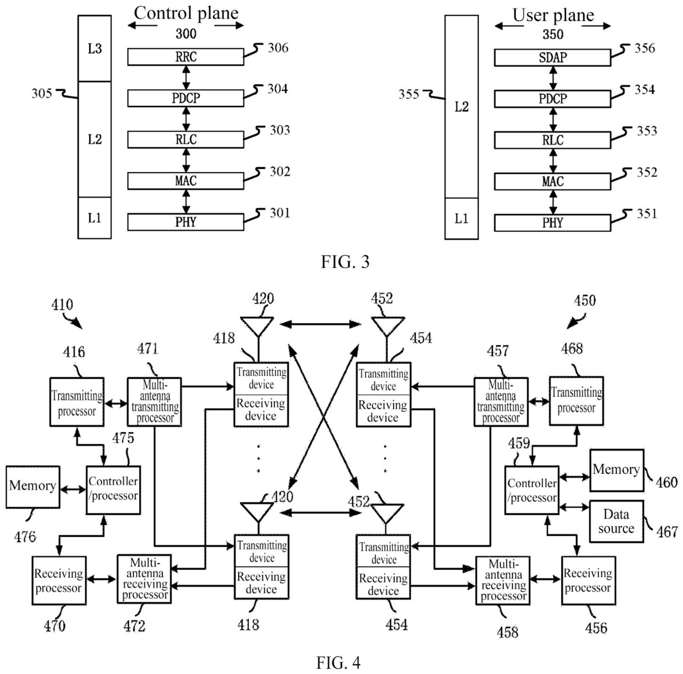

Embodiment 3 shows a schematic diagram of an embodiment of a wireless protocol architecture of one user plane and one control plane according to the present application, as shown in FIG. 3. FIG. 3 is a schematic diagram illustrating an embodiment of a radio protocol architecture for a user plane 350 and a control plane 300, and FIG. 3 shows the radio protocol architecture for a first communication node device (UE, a gNB or an RSU in V2X) and a second communication node device (a gNB, UE or an RSU in V2X), or the control plane 300 between two pieces of UE using three layers: a Layer 1, a Layer 2, and a Layer 3. The Layer 1 (L1 layer) is the lowest layer and implements various PHY (physical layer) signal processing functions. The L1 layer will be referred to as a PHY301 herein. A Layer 2 (L2 layer) 305 is above the PHY301 and is responsible for a link between the first communication node device and the second communication node device as well as between two pieces of UE through the PHY301. The L2 layer 305 comprises a MAC (Medium Access Control) sublayer 302, an RLC (Radio Link Control) sublayer 303, and a PDCP (Packet Data Convergence Protocol) sublayer 304, these sublayers terminating at the second communication node device. The PDCP sublayer 304 provides multiplexing between different radio bearers and logical channels. The PDCP sublayer 304 also provides security by encrypting data packets, and provides handover support for the first communication node device between the second communication node devices. The RLC sublayer 303 provides segmentation and reassembly of upper layer data packets, retransmission of lost data packets, and reordering of data packets to compensate for out-of-order reception due to an HARQ. The MAC sublayer 302 provides multiplexing between logical and transport channels. The MAC sublayer 302 is also responsible for assigning various radio resources (e.g., resource blocks) in one cell between the first communication node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring a lower layer using RRC signaling between the second communication node device and the first communication node device. The radio protocol architecture of the user plane 350 comprises the Layer 1 (L1 layer) and the Layer 2 (L2 layer). The radio protocol architecture for the first communication node device and the second communication node device in the user plane 350 is substantially the same as corresponding layers and sublayers in the control plane 300 for a physical layer 351, a PDCP sublayer 354 in an L2 layer 355, an RLC sublayer 353 in the L2 layer 355, and a MAC sublayer 352 in the L2 layer 355, but the PDCP sublayer 354 also provides header compression for upper layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services. Although not shown in the figure, the first communication node device may have several upper layers above the L2 layer 355, comprising a network layer (e.g., an IP layer) terminating at a P-GW on a network side and an application layer terminating at another end (e.g., remote UE, a server, etc.) of the connection.

As one embodiment, the wireless protocol architecture in FIG. 3 is applicable to a first node in the present application.

As one embodiment, the wireless protocol architecture in FIG. 3 is applicable to a second node in the present application.

As one embodiment, first RRC signaling in the present application is generated in the RRC sublayer 306.

As one embodiment, a first information block in the present application is generated in the RRC sublayer 306.

As one embodiment, the first information block in the present application is generated in the MAC sublayer 302.

As one embodiment, the first information block in the present application is generated in the PHY301.

As one embodiment, first signaling in the present application is generated in the PHY301.

**Embodiment 4**

Embodiment 4 shows a schematic diagram of a first communication device and a second communication device according to the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In a transmission from the first communication device 410 to the second communication device 450, at the first communication device 410, upper layer data packets from a core network are provided to the controller/processor 475. The controller/processor 475 implements the functionality of an L2 layer. In the transmission from the first communication device 410 to the second communication device 450, the controller/processor 475 provides header compression, encryption, packet segmentation and reordering, multiplexing between logical and transport channels, and radio resource assignment to the second communication device 450 based on various priority metrics. The controller/processor 475 is also responsible for retransmission of lost packets and signaling to the second communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 450, as well as mapping of signal clusters based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on the coded and modulated symbols to generate one or more spatial streams. The transmitting processor 416 then maps each spatial stream to a subcarrier, multiplexes with a reference signal (e.g., pilot frequency) in a time domain and/or frequency domain, and then uses an inverse fast Fourier transform (IFFT) to generate a physical channel carrying a time-domain multi-carrier symbol stream. The multi-antenna transmitting processor 471 then performs sending analog precoding/beamforming operations on the time-domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the first communication device 410 to the second communication device 450, at the second communication device 450, each receiving device 454 receives a signal through its corresponding antenna 452. Each receiving device 454 recovers information modulated onto a radio frequency carrier, converts a radio frequency stream into a baseband multi-carrier symbol stream, and provides it to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 uses a fast Fourier transform (FFT) to convert the baseband multi-carrier symbol stream from a time domain to a frequency domain after the receiving analog precoding/beamforming operations. In the frequency domain, a physical layer data signal and the reference signal are demultiplexed by the receiving processor 456, wherein the reference signal will be used for channel estimation, and the data signal is recovered after multi-antenna detection in the multi-antenna receiving processor 458 to recover any spatial stream destined for the second communication device 450. Symbols on each spatial stream are demodulated and recovered in the receiving processor 456, and a soft decision is generated. The receiving processor 456 then decodes and deinterleaves the soft decision to recover upper layer data and control signals transmitted by the first communication device 410 on the physical channel. The upper layer data and control signals are then provided to the controller/processor 459. The controller/processor 459 implements functions of the L2 layer. The controller/processor 459 may be associated with the memory 460 that stores program code and data. The memory 460 may be referred to as a computer-readable medium. In the transmission from the first communication device 410 to the second communication device 450, the controller/processor 459 provides demultiplexing between transport and logical channels, packet reassembly, decryption, header decompression, and control signal processing to recover upper layer data packets from the core network. The upper layer data packets are then provided to all protocol layers above the L2 layer. Various control signals may also be provided to an L3 for L3 processing.

In a transmission from the second communication device 450 to the first communication device 410, at the second communication device 450, the data source 467 is used for providing the upper layer data packets to the controller/processor 459. The data source 467 represents all protocol layers above the L2 layer. Similar to the sending function at the first communication device 410 described in the transmission from the first communication device 410 to the second communication device 450, the controller/processor 459 implements header compression, encryption, packet segmentation and reordering, and multiplexing between logical and transport channels based on radio resource assignment, and implements the functions of the L2 layer for a user plane and a control plane. The controller/processor 459 is also responsible for the retransmission of lost packets and signaling to the first communication device 410. The transmitting processor 468 executes modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the generated spatial stream into a multi-carrier/single-carrier symbol stream, which is provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into the radio frequency symbol stream, which is then provided to the antenna 452.

In the transmission from the second communication device 450 to the first communication device 410, a function at the first communication device 410 is similar to a receiving function at the second communication device 450 described in the transmission from the first communication device 410 to the second communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1 layer. The controller/processor 475 implements functions of the L2 layer. The controller/processor 475 may be associated with the memory 476 that stores program code and data. The memory 476 may be referred to as a computer-readable medium. In the transmission from the second communication device 450 to the first communication device 410, the controller/processor 475 provides demultiplexing between transport and logical channels, packet reassembly, decryption, header decompression, and control signal processing to recover upper layer data packets from the UE450. The upper layer data packets from the controller/processor 475 can be provided to the core network.

As one embodiment, a first node in the present application comprises the second communication device 450, and a second node in the present application comprises the first communication device 410.

As one sub-embodiment of the above embodiment, the first node is user equipment, and the second node is a relay node.

As one sub-embodiment of the above embodiment, the first node is user equipment, and the second node is a base station device.

As one sub-embodiment of the above embodiment, the first node is a relay node, and the second node is a base station device.

As one sub-embodiment of the above embodiment, the second communication device 450 comprises: at least one controller/processor; and the at least one controller/processor is responsible for HARQ operations.

As one sub-embodiment of the above embodiment, the first communication device 410 comprises: at least one controller/processor; the at least one controller/processor is responsible for HARQ operations.

As one sub-embodiment of the above embodiment, the first communication device 410 comprises: at least one controller/processor; and the at least one controller/processor is responsible for performing error detection using acknowledgement (ACK) and/or negative acknowledgement (NACK) protocols to support HARQ operations.

As one embodiment, the second communication device 450 comprises: at least one processor and at least one memory, the at least one memory comprising computer program code; and the at least one memory and the computer program code are configured to be used together with the at least one processor. The second communication device 450 apparatus at least: receives first RRC signaling and a first information block, at least one symbol being indicated to be a downlink symbol by the first RRC signaling; and receives first signaling in a first PDCCH, wherein the first signaling comprises G bit sets, a first bit set is one of the G bit sets, and G is a positive integer greater than 1, wherein the G bit sets are mapped to G symbol groups on a one-to-one basis, and a first symbol group is a symbol group, to which the first bit set is mapped, among the G symbol groups; a condition that a first-type transmission, which occupies at least one symbol in the first symbol group, is cancelled is based on at least one bit in the first bit set, wherein the first-type transmission is an uplink transmission; any one of the G symbol groups comprises at least one first-type symbol, and whether at least one symbol, which is indicated to be a downlink symbol by the first RRC signaling, belongs to the first-type symbol depends on the first information block; and the first PDCCH is used for determining the G symbol groups.

As one sub-embodiment of the above embodiment, the second communication device 450 corresponds to the first node in the present application.

As one embodiment, the second communication device 450 comprises: a memory storing a computer-readable instruction program, the computer-readable instruction program generating actions when executed by at least one processor, and the actions comprising: receiving the first RRC signaling and the first information block, at least one symbol being indicated to be a downlink symbol by the first RRC signaling; and receiving the first signaling in the first PDCCH, wherein the first signaling comprises G bit sets, the first bit set is one of the G bit sets, and G is a positive integer greater than 1, wherein the G bit sets are mapped to G symbol groups on a one-to-one basis, and the first symbol group is a symbol group, to which the first bit set is mapped, among the G symbol groups; a condition that the first-type transmission, which occupies at least one symbol in the first symbol group, is cancelled is based on at least one bit in the first bit set, wherein the first-type transmission is an uplink transmission; any one of the G symbol groups comprises at least one first-type symbol, and whether at least one symbol, which is indicated to be a downlink symbol by the first RRC signaling, belongs to the first-type symbol depends on the first information block; and the first PDCCH is used for determining the G symbol groups.

As one sub-embodiment of the above embodiment, the second communication device 450 corresponds to the first node in the present application.

As one embodiment, the first communication device 410 comprises: at least one processor and at least one memory, the at least one memory comprising computer program code; and the at least one memory and the computer program code are configured to be used together with the at least one processor. The first communication device 410 apparatus at least: sends the first RRC signaling and the first information block, at least one symbol being indicated to be a downlink symbol by the first RRC signaling; and sends the first signaling in the first PDCCH, wherein the first signaling comprises G bit sets, the first bit set is one of the G bit sets, and G is a positive integer greater than 1, wherein the G bit sets are mapped to G symbol groups on a one-to-one basis, and the first symbol group is a symbol group, to which the first bit set is mapped, among the G symbol groups; a condition that the first-type transmission, which occupies at least one symbol in the first symbol group, is cancelled is based on at least one bit in the first bit set, wherein the first-type transmission is an uplink transmission; any one of the G symbol groups comprises at least one first-type symbol, and whether at least one symbol, which is indicated to be a downlink symbol by the first RRC signaling, belongs to the first-type symbol depends on the first information block; and the first PDCCH is used for determining the G symbol groups.

As one sub-embodiment of the above embodiment, the first communication device 410 corresponds to the second node in the present application.

As one embodiment, the first communication device 410 comprises: a memory storing a computer-readable instruction program, the computer-readable instruction program generating actions when executed by at least one processor, and the actions comprising: sending the first RRC signaling and the first information block, at least one symbol being indicated to be a downlink symbol by the first RRC signaling; and sending the first signaling in the first PDCCH, wherein the first signaling comprises G bit sets, the first bit set is one of the G bit sets, and G is a positive integer greater than 1, wherein the G bit sets are mapped to G symbol groups on a one-to-one basis, and the first symbol group is a symbol group, to which the first bit set is mapped, among the G symbol groups; a condition that the first-type transmission, which occupies at least one symbol in the first symbol group, is cancelled is based on at least one bit in the first bit set, wherein the first-type transmission is an uplink transmission; any one of the G symbol groups comprises at least one first-type symbol, and whether at least one symbol, which is indicated to be a downlink symbol by the first RRC signaling, belongs to the first-type symbol depends on the first information block; and the first PDCCH is used for determining the G symbol groups.

As one sub-embodiment of the above embodiment, the first communication device 410 corresponds to the second node in the present application.

As one embodiment, at least one of {the antenna 452, the receiving device 454, the multi-antenna receiving processor 458, the receiving processor 456, the controller/processor 459, the memory 460, and the data source 467} is used for receiving the first RRC signaling in the present application.

As one embodiment, at least one of {the antenna 420, the transmitting device 418, the multi-antenna transmitting processor 471, the transmitting processor 416, the controller/processor 475, and the memory 476} is used for sending the first RRC signaling in the present application.

As one embodiment, at least one of {the antenna 452, the receiving device 454, the multi-antenna receiving processor 458, the receiving processor 456, the controller/processor 459, the memory 460, and the data source 467} is used for receiving the first information block in the present application.

As one embodiment, at least one of {the antenna 420, the transmitting device 418, the multi-antenna transmitting processor 471, the transmitting processor 416, the controller/processor 475, and the memory 476} is used for sending the first information block in the present application.

As one embodiment, at least one of {the antenna 452, the receiving device 454, the multi-antenna receiving processor 458, the receiving processor 456, the controller/processor 459, the memory 460, and the data source 467} is used for receiving the first signaling in the present application.

As one embodiment, at least one of {the antenna 420, the transmitting device 418, the multi-antenna transmitting processor 471, the transmitting processor 416, the controller/processor 475, and the memory 476} is used for sending the first signaling in the present application.

As one embodiment, at least one of {the antenna 452, the transmitting device 454, the multi-antenna transmitting processor 458, the transmitting processor 468, the controller/processor 459, the memory 460, and the data source 467} is used for determining the cancellation of one uplink transmission.

As one embodiment, at least one of {the antenna 452, the transmitting device 454, the multi-antenna transmitting processor 458, the transmitting processor 468, the controller/processor 459, the memory 460, and the data source 467} is used for executing one uplink transmission.

## Embodiment 5

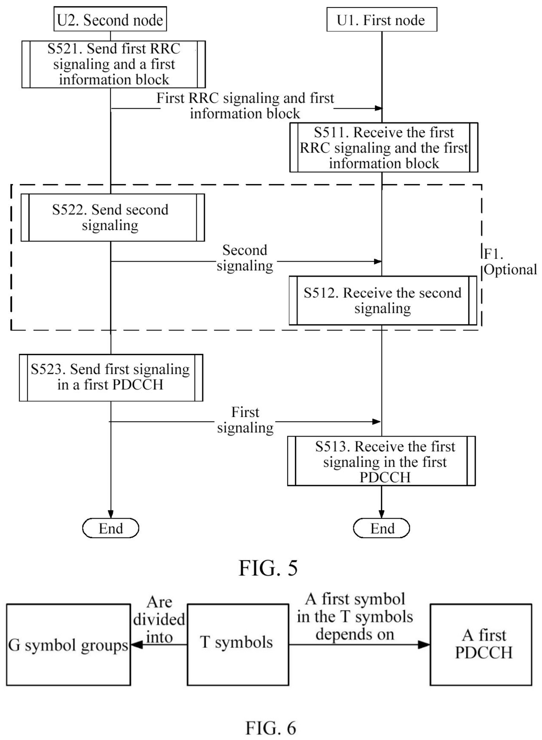

Embodiment 5 illustrates a flow chart of a signal transmission according to one embodiment of the present application, as shown in FIG. 5. In FIG. 5, a first node U1 and a second node U2 communicate through an air interface. In particular, in FIG. 5, steps in a dotted block F1 are optional.

The first node U1 receives first RRC signaling and a first information block in step S511; receives second signaling in step S512; and receives first signaling in a first PDCCH in step S513.

The second node U2 sends the first RRC signaling and the first information block in step S521; sends the second signaling in step S522; and sends the first signaling in the first PDCCH in step S523.

In Embodiment 5, at least one symbol is indicated to be a downlink symbol by the first RRC signaling; the first signaling comprises G bit sets, a first bit set is one of the G bit sets, and G is a configurable positive integer greater than 1; the G bit sets are mapped to G symbol groups on a one-to-one basis, and a first symbol group is a symbol group, to which the first bit set is mapped, among the G symbol groups; a condition that a first-type transmission, which occupies at least one symbol in the first symbol group, is cancelled is based on at least one bit in the first bit set, wherein the first-type transmission is an uplink transmission; any one of the G symbol groups comprises at least one first-type symbol, and whether at least one symbol, which is indicated to be a downlink symbol by the first RRC signaling, belongs to the first-type symbol depends on the first information block; T symbols are divided into the G symbol groups, the T symbols all belong to the first-type symbol, the first PDCCH is used for determining a first symbol in the T symbols, and T is determined based on a configuration of RRC signaling; the first RRC signaling is tdd-UL-DL-ConfigurationCommon, and the first signaling is a DCI format 2_4; a target uplink transmission belongs to the first-type transmission and the first symbol group comprises one symbol occupied by the target uplink transmission; when a first condition is satisfied, the target uplink transmission is cancelled; the first condition comprises: the first bit set comprises at least one bit with a value of 1; and the target uplink transmission is a PUSCH transmission or an SRS transmission.

As one sub-embodiment of Embodiment 5, the first-type symbol is a symbol other than a second-type symbol; and a symbol other than a symbol configured to be available for an uplink transmission by the first information block and indicated to be a downlink symbol by the first RRC signaling belongs to the second-type symbol.

As one sub-embodiment of Embodiment 5, a plurality of bits in the first bit set are mapped to a plurality of PRB groups on a one-to-one basis, and the plurality of PRB groups are configurable and each PRB group among the plurality of PRB groups comprises at least one PRB; and the first condition comprises: a PRB group to which one bit with a value of 1 in the first bit set is mapped comprises one PRB of the target uplink transmission.

As one embodiment, the first node U1 is a first node in the present application.

As one embodiment, the second node U2 is a second node in the present application.

As one embodiment, the first node U1 is one piece of UE.

As one embodiment, the second node U2 is one base station.

As one embodiment, an air interface between the second node U2 and the first node U1 is a Uu interface.

As one embodiment, the air interface between the second node U2 and the first node U1 comprises a cellular link.

As one embodiment, the air interface between the second node U2 and the first node U1 comprises a radio interface between a base station device and user equipment.

As one embodiment, the air interface between the second node U2 and the first node U1 comprises a wireless interface between a satellite device and user equipment.

As one embodiment, the first RRC signaling is received before the first information block.

As one embodiment, the first RRC signaling is received after the first information block.

As one embodiment, the first RRC signaling and the first information block are received simultaneously.

As one embodiment, the second signaling is used for scheduling the target uplink transmission.

As one embodiment, the second signaling is used for activating the target uplink transmission.

As one embodiment, the second signaling is DCI.

As one embodiment, the second signaling is RRC signaling.

As one embodiment, the second signaling comprises an uplink grant.

As one embodiment, the steps in the dotted block F1 exist.

As one embodiment, the steps in the dotted block F1 do not exist.

**Embodiment 6**

Embodiment 6 illustrates a schematic diagram of a relationship among G symbol groups, T symbols, and a first PDCCH according to one embodiment of the present application, as shown in FIG. 6.

In Embodiment 6, T symbols are divided into the G symbol groups, the T symbols all belong to a first-type symbol, a first symbol in the T symbols depends on the first PDCCH, and T is a positive integer greater than 1.

As one embodiment, T symbols are divided into the G symbol groups, the T symbols all belong to the first-type symbol, the first PDCCH is used for determining the T symbols, and T is a positive integer greater than 1.

As one embodiment, in order to determine the T symbols, a first node excludes symbol(s) other than the first-type symbol.

As one embodiment, benefits of the above method comprise: helping to efficiently realize a function of cancelling an uplink transmission that occupies the first-type symbol.

As one embodiment, the benefits of the above method comprise: having higher bit utilization efficiency.

As one embodiment, T is configurable.

As one embodiment, T is not greater than 14.

As one embodiment, T is determined based on a configuration of RRC signaling.

As one embodiment, T is determined based on a configuration of timeDurationforCI in timeFrequencyRegion.

As one embodiment, T depends on a PDCCH monitoring periodicity.

As one embodiment, T depends on a PDCCH monitoring periodicity and is greater than 14.

As one embodiment, T is the number of the first-type symbols in a PDCCH monitoring periodicity for a search space set for detecting a DCI format 2_4.

As one embodiment, the first PDCCH is used for determining the first symbol in the T symbols.

As one embodiment, the end of the first PDCCH indicates the first symbol in the T symbols.

As one embodiment, the number of PDSCHs (Physical downlink shared channels) which overlap with the first PDCCH indicates a time domain position of the first symbol in the T symbols according to a pre-defined mapping rule.

As one embodiment, the number of bits with values of 0 transmitted through the first PDCCH indicates an index of the first symbol in the T symbols according to a pre-defined mapping rule.

As one embodiment, the T symbols are all after the end of the first PDCCH.

As one embodiment, there exists no the first-type symbol other than the T symbols between the first symbol and the last symbol in the T symbols.

As one embodiment, a relative position relationship in a time domain between a symbol other than the first symbol in the T symbols and the first symbol among the T symbols is configurable.

As one embodiment, the T symbols are divided into the G symbol groups according to a pre-defined rule.

As one embodiment, earlier symbols among the T symbols are divided into symbol groups with smaller indexes among the G symbol groups.

As one embodiment, later symbols among the T symbols are divided into symbol groups with smaller indexes among the G symbol groups.

As one embodiment, G is configurable, and is used for determining the number of symbols comprised in each of the G symbol groups.

As one embodiment, the benefits of the above method comprise: reducing signaling overhead required for determining the G symbol groups.

As one embodiment, each of the first $G - T + \lceil T/G \rceil \cdot G$ symbol groups among the G symbol groups comprises $\lceil T/G \rceil$ symbols in the T symbols, and each of the remaining $T - \lfloor T/G \rfloor \cdot G$ symbol groups among the G symbol groups comprises $\lfloor T/G \rfloor$ symbols among the T symbols.

As one embodiment, each of the T symbols is divided into only one of the G symbol groups.

As one embodiment, each of the G symbol groups comprises at least one of the T symbols.

**Embodiment 7**

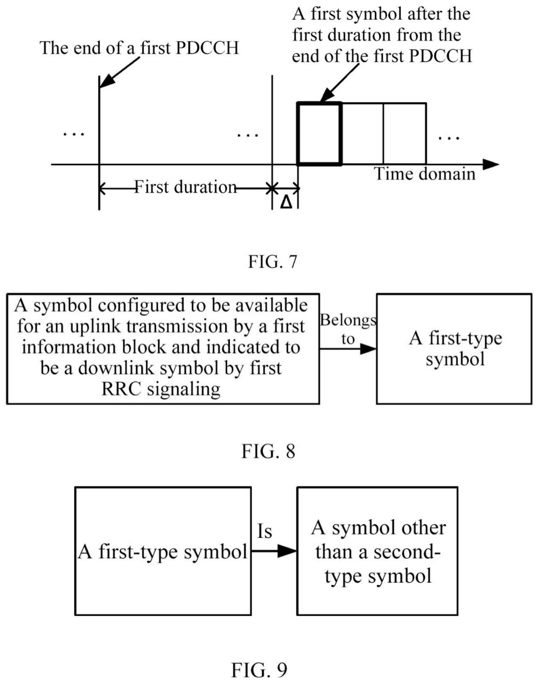

Embodiment 7 illustrates a schematic diagram explaining a first symbol after a first duration from the end of a first PDCCH according to one embodiment of the present application, as shown in FIG. 7. In FIG. 7, one block represents one symbol, and a block with a bold border represents the first symbol after the first duration from the end of the first PDCCH.

In Embodiment 7, $\Delta$ is equal to 0, or, $\Delta$ is greater than 0 and less than a duration occupied by one symbol.

As one embodiment, $\Delta$ is equal to 0.

As one embodiment, $\Delta$ is greater than 0 and less than a duration occupied by one symbol.

As one embodiment, the first duration is configurable.

As one embodiment, the first duration is related to a PUSCH preparation time.

As one embodiment, a first symbol in the T symbols is the first symbol after the first duration from the end of the first PDCCH.

As one embodiment, the first symbol in the T symbols is after the first symbol after the first duration from the end of the first PDCCH.

As one embodiment, the first symbol in the T symbols is not earlier than the first symbol after the first duration from the end of the first PDCCH, and the first duration is related to the PUSCH preparation time.

As one embodiment, the first symbol in the T symbols is determined to be the first symbol after the first duration from the end of the first PDCCH, and the first duration is related to the PUSCH preparation time.

As one embodiment, the first symbol in the T symbols is determined to be a first symbol belonging to a first-type symbol after the first duration from the end of the first PDCCH, and the first duration is related to the PUSCH preparation time.

As one embodiment, the first symbol belonging to the first-type symbol after the first duration from the end of the first PDCCH is: the earliest symbol not earlier than the first symbol after the first duration from the end of the first PDCCH and belonging to the first-type symbol.

As one embodiment, R symbols are consecutive in a time domain, and R is configured by RRC signaling; a first symbol in the R symbols is determined to be the first symbol after the first duration from the end of the first PDCCH, and the first duration is related to the PUSCH preparation time; and the T symbols are composed of all the first-type symbols among the R symbols.

As one embodiment, the first duration is obtained from the PUSCH preparation time for PUSCH processing capability 2.

As one embodiment, the first duration is obtained by executing the calculation for the PUSCH preparation time according to a first assumption, and the first assumption depends on delta_Offset.

As one embodiment, the first duration is obtained from the PUSCH preparation time for PUSCH processing capability 2 according to the first assumption, and the first assumption is related to an SCS configuration.

As one embodiment, the first assumption is: assuming $d_{2,1} = d_{offset} \cdot 2^{-\mu_{UL}}/2^{-\mu}$, wherein the $d_{offset}$ is configured by delta_Offset, $\mu_{UL}$ is a minimum SCS configuration provided by scs-SpecificCarrierList in FrequencyInfoUL or FrequencyInfoUL-SIB, $\mu$ is a minimum SCS setting between an SCS configuration of the first PDCCH and $\mu_{UL}$.

**Embodiment 8**

Embodiment 8 illustrates a schematic diagram of a relationship between symbols indicated to be downlink symbols by first RRC signaling and a first-type symbol according to one embodiment of the present application, as shown in FIG. 8.

In Embodiment 8, a symbol configured to be available for an uplink transmission by a first information block and indicated to be a downlink symbol by the first RRC signaling belongs to the first-type symbol.

As one embodiment, benefits of the above method comprise: helping to realize the cancellation of an uplink transmission that occupies a symbol indicated to be a downlink symbol by the first RRC signaling but is available for the uplink transmission, and improving flexibility of uplink scheduling.

As one embodiment, the benefits of the above method comprise: enhancing a function of cancelling an uplink transmission by first signaling.

As one embodiment, the first RRC signaling is tdd-UL-DL-ConfigurationCommon, and a symbol configured to be available for an uplink transmission by the first information block and indicated to be a downlink symbol by the first RRC signaling belongs to the first-type symbol.

As one embodiment, the benefits of the above method comprise: helping to realize the cancellation of an uplink transmission that occupies a symbol indicated to be a downlink symbol by tdd-UL-DL-Configuration-Common but is available for the uplink transmission, and improving flexibility of uplink scheduling.

As one embodiment, the meaning of an expression of "available for an uplink transmission" comprises: at least available for a PUSCH (Physical uplink shared channel) transmission.

As one embodiment, the meaning of the expression of "available for an uplink transmission" comprises: at least available for a PUCCH (Physical uplink control channel) transmission.

As one embodiment, the meaning of the expression of "available for an uplink transmission" comprises: at least available for an SRS (Sounding reference signal) transmission.

As one embodiment, the meaning of the expression "available for an uplink transmission" comprises: available for at least one of a PUSCH transmission, a PUCCH transmission, a PRACH (Physical random access channel) transmission, and an SRS transmission.

As one embodiment, the meaning of the expression of "available for an uplink transmission" comprises: available for at least two of a PUSCH transmission, a PUCCH transmission, a PRACH (Physical random access channel) transmission, and an SRS transmission.

As one embodiment, the meaning of the expression of "available for an uplink transmission" comprises: available for at least three of a PUSCH transmission, a PUCCH transmission, a PRACH (Physical random access channel) transmission, and an SRS transmission.

As one embodiment, the meaning of the expression of "available for an uplink transmission" comprises: available for a PUSCH transmission, a PUCCH transmission, a PRACH (Physical random access channel) transmission, and an SRS transmission.

As one embodiment, the meaning of the expression of "available for an uplink transmission" comprises: available for a transmission of UL-SCHs (Uplink Shared Channels).

As one embodiment, a first symbol is a symbol indicated to be a downlink symbol by the first RRC signaling; if the first symbol is configured to be available for an uplink transmission by the first information block, the first symbol belongs to the first-type symbol; otherwise, the first symbol does not belong to the first-type symbol.

As one embodiment, a symbol, which is indicated to be an uplink symbol by the first RRC signaling, belongs to the first-type symbol.

As one embodiment, the benefits of the above method comprise: having good compatibility for existing 3GPP technical specifications.

As one embodiment, a symbol, which is indicated to be a flexible symbol by the first RRC signaling, belongs to the first-type symbol.

As one embodiment, the benefits of the above method comprise: having good compatibility for existing 3GPP technical specifications.

As one embodiment, whether symbols indicated to be flexible symbols by the first RRC signaling belong to the first-type symbol is configured by the first information block.

As one embodiment, a symbol for reception of an SS/PBCH block does not belong to the first-type symbol.

**Embodiment 9**

Embodiment 9 illustrates a schematic diagram explaining a first-type symbol according to one embodiment of the present application, as shown in FIG. 9.

In Embodiment 9, the first-type symbol is a symbol other than a second-type symbol.

As one embodiment, a symbol other than a symbol configured to be available for an uplink transmission by a first information block and indicated to be a downlink symbol by first RRC signaling belongs to the second-type symbol.

As one embodiment, a first symbol is a symbol indicated to be a downlink symbol by the first RRC signaling; if the first symbol is configured to be available for an uplink transmission by the first information block, the first symbol does not belong to the second-type symbol; otherwise, the first symbol belongs to the second-type symbol.

As one embodiment, a symbol other than a symbol configured to be available for an uplink transmission by the first information block and indicated to be a downlink symbol by the first RRC signaling does not belong to the first-type symbol.

As one embodiment, a symbol other than a symbol configured to be available for a full-duplex operation by the first information block and indicated to be a downlink symbol by the first RRC signaling belongs to the second-type symbol.

As one embodiment, a symbol configured to be available for a full-duplex operation by the first information block and indicated to be a downlink symbol by the first RRC signaling does not belong to the second-type symbol.

As one embodiment, a symbol other than a symbol configured for a full-duplex mode by the first information block and indicated to be a downlink symbol by the first RRC signaling belongs to the second-type symbol.

As one embodiment, a symbol configured for a full-duplex mode by the first information block and indicated to be a downlink symbol by the first RRC signaling does not belong to the second-type symbol.

As one embodiment, benefits of the above method comprise: helping to support full-duplex operations.

As one embodiment, when the first symbol is a symbol other than a symbol indicated to be a downlink symbol by the first RRC signaling and explicitly indicated by the first information block, the first symbol belongs to the second-type symbol.

As one embodiment, a symbol for reception of an SS/PBCH block belongs to the second-type symbol.

As one embodiment, a symbol other than the second-type symbol does not belong to the second-type symbol.

**Embodiment 10**

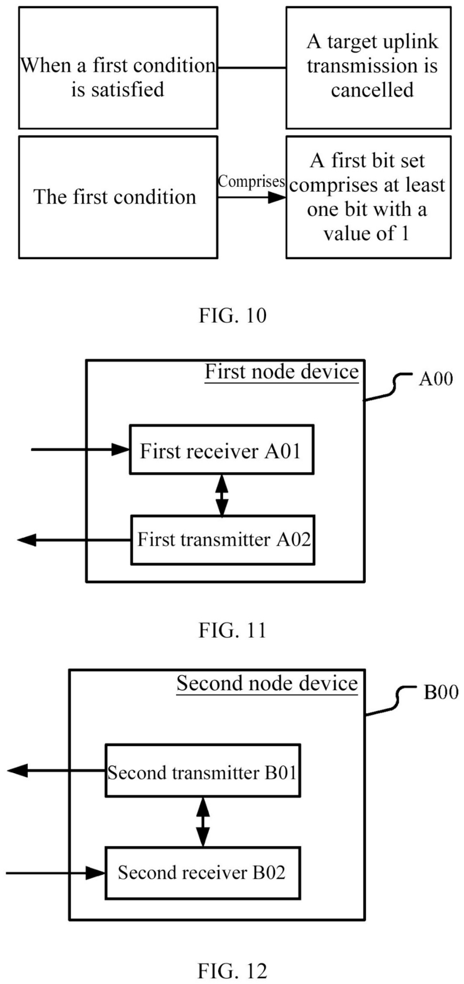

Embodiment 10 illustrates a schematic diagram explaining a condition that a target uplink transmission is cancelled according to one embodiment of the present application, as shown in FIG. 10.

In Embodiment 10, the target uplink transmission belongs to a first-type transmission and a first symbol group comprises at least one symbol occupied by the target uplink transmission; when a first condition is satisfied, the target uplink transmission is cancelled; and the first condition comprises: a first bit set comprises at least one bit with a value of 1.

As one embodiment, at least one bit in the first bit set is a bit related to the cancellation of the first-type transmission.

As one embodiment, the target uplink transmission belongs to the first-type transmission and at least one symbol in the first symbol group overlaps with one symbol occupied by the target uplink transmission in the time domain; when the first condition is satisfied, the target uplink transmission is cancelled; and the first condition comprises: the first bit set comprises at least one bit with a value of 1.

As one embodiment, the target uplink transmission occupies at least one symbol, which belongs to a first-type symbol, in the first symbol group.

As one embodiment, the first condition is a condition that the first-type transmission that occupies at least one symbol in the first symbol group is cancelled, and the first condition comprises: the first bit set comprises at least one bit with a value of 1.

As one embodiment, the first condition comprises: the target uplink transmission is a PUSCH transmission with a priority index of 0.

As one embodiment, a plurality of bits in the first bit set are mapped to a plurality of PRB groups on a one-to-one basis, and the plurality of PRB groups are configurable and each PRB group among the plurality of PRB groups comprises at least one PRB; and the first condition comprises: a PRB group to which one bit with a value of 1 in the first bit set is mapped comprises one PRB of the target uplink transmission.

As one embodiment, the first condition comprises a plurality of sub-conditions, and the meaning of the first condition being satisfied is: the plurality of sub-conditions are all satisfied; and the meaning of an expression of "the first condition comprises: the first bit set comprises at least one bit with a value of 1" is: one sub-condition among the plurality of sub-conditions is: the first bit set comprises at least one bit with a value of 1.

As one sub-embodiment of the above embodiment, one sub-condition among the plurality of sub-conditions is: the target uplink transmission is a PUSCH transmission with a priority index of 0.

As one sub-embodiment of the above embodiment, the plurality of bits in the first bit set are mapped to the plurality of PRB groups on a one-to-one basis, and the plurality of PRB groups are configurable and each PRB group among the plurality of PRB groups comprises at least one PRB; and one sub-condition among the plurality of sub-conditions is: a PRB group to which one bit with a value of 1 in the first bit set is mapped comprises one PRB of the target uplink transmission.

As one embodiment, the plurality of bits in the first bit set are mapped to the plurality of PRB groups on a one-to-one basis, and the plurality of PRB groups are configurable and each PRB group among the plurality of PRB groups comprises at least one PRB.

As one embodiment, the plurality of bits in the first bit set and the plurality of PRB groups are mapped on a one-to-one basis in the order of bit ordering indexes from small to large and PRB group indexes from small to large.

As one embodiment, the plurality of bits in the first bit set and the plurality of PRB groups are mapped on a one-to-one basis in the order of bit ordering indexes from small to large and PRB group indexes from large to small.

As one embodiment, a mapping relationship between the plurality of bits in the first bit set and the plurality of PRB groups is pre-defined.

As one embodiment, benefits of the above method comprise: reducing processing complexity of UE.

As one embodiment, the mapping relationship between the plurality of bits in the first bit set and the plurality of PRB groups is configurable.

As one embodiment, the mapping relationship between the plurality of bits in the first bit set and the plurality of PRB groups is configured by RRC signaling.

As one embodiment, the plurality of PRB groups are determined through a configuration of RRC signaling.

As one embodiment, any PRB in one of the plurality of PRB groups is not comprised in any PRB group other than the one of the plurality of PRB groups.

As one embodiment, the target uplink transmission is a PUSCH transmission.

As one embodiment, the target uplink transmission is one repetition of a PUSCH transmission.

As one embodiment, the benefits of the above method comprise: helping to realize the completion of reassignment of resources through cancellation of a PUSCH transmission, thereby optimizing system efficiency.

As one embodiment, the target uplink transmission is an SRS transmission.

As one embodiment, the benefits of the above method comprise: helping to realize the completion of reassignment of resources through cancellation of an SRS transmission, thereby optimizing system efficiency.

As one embodiment, the target uplink transmission comprises a transmission of a UL-SCH.

As one embodiment, the target uplink transmission does not precede a symbol that is later than the last symbol of a first PDCCH for a second duration, and the second duration is a PUSCH preparation time assuming $d_{2,1} = 0$.

As one embodiment, the meaning that the target uplink transmission is cancelled comprises: the target uplink transmission, or part of the target uplink transmission on at least one symbol is cancelled.

As one embodiment, when part of the target uplink transmission on one symbol is cancelled, part of the target uplink transmission after this symbol is also cancelled.

As one embodiment, when the first condition is satisfied, at least part of the target uplink transmission on a symbol in the first symbol group is cancelled.

As one embodiment, when the first condition is satisfied, part of the target uplink transmission on all symbols starting from a target symbol is cancelled, and the target symbol is the earliest symbol occupied by the target uplink transmission in the first symbol group.

As one embodiment, when a first node determines not to cancel the target uplink transmission through calculation or judgment, the first node transmits data or signals through the target uplink transmission.

As one embodiment, the target uplink transmission occupies at least one symbol indicated to be a downlink symbol by first RRC signaling and belonging to the first-type symbol.

As one embodiment, the benefits of the above method comprise: helping to realize the completion of the reassignment of resources through the cancellation of an uplink transmission that occupies a symbol indicated to be a downlink symbol by the first RRC signaling and belonging to the first-type symbol, thereby optimizing system efficiency.

As one embodiment, when the target uplink transmission is not cancelled, the first condition is not satisfied.

As one embodiment, when a condition causing the first node to determine that the target uplink transmission is cancelled is satisfied, the target uplink transmission is cancelled.

As one embodiment, when a condition causing the first node to determine that the target uplink transmission is not cancelled is satisfied, the target uplink transmission is not cancelled.

As one embodiment, when a second condition is satisfied, the target uplink transmission is not cancelled; and the second condition comprises: the first bit set does not comprise any bit with a value of 1.

As one embodiment, when the target uplink transmission does not occupy any symbol in any first-type symbol group, the target uplink transmission is not cancelled; and the first-type symbol group is a symbol group to which a first-type bit set among G bit sets is mapped, and the first-type bit set is a bit set comprising at least one bit with a value of 1.

As one embodiment, when the target uplink transmission does not occupy any symbol in any second-type symbol group, the target uplink transmission is not cancelled; the second-type symbol group is a symbol group to which a second-type bit set among the G bit sets is mapped, and each bit in each bit set among the G bit sets is mapped to a configurable PRB group comprising at least one PRB; and the second-type bit set comprises at least one bit with a value of 1, and for any one of the second-type bit sets, a PRB group to which one comprised bit with a value of 1 is mapped comprises one PRB of the target uplink transmission.

As one embodiment, when one symbol group comprises at least one symbol occupied by the target uplink transmission, the target uplink transmission occupies at least one symbol in this symbol group.

As one embodiment, when there exists at least one symbol in one symbol group that overlaps with a symbol occupied by the target uplink transmission in a time domain, the target uplink transmission occupies at least one symbol in this symbol group.

As one embodiment, for one of the first-type transmissions that does not occupy any symbol in one symbol group, each symbol occupied is not comprised in this symbol group.

As one embodiment, for one of the first-type transmissions that does not occupy any symbol in one symbol group, each symbol occupied does not overlap with any symbol in this symbol group in a time domain.

As one embodiment, when the target uplink transmission is a PUSCH transmission with a priority index of 1, the target uplink transmission is not cancelled.

## Embodiment 11

Embodiment 11 illustrates one structural block diagram of a processing apparatus in a first node device, as shown in FIG. 11. In FIG. 11, a processing apparatus A00 of the first node device comprises a first receiver A01 and a first transmitter A02.

As one embodiment, a first node device A00 is user equipment.

As one embodiment, the first node device A00 is a relay node.

As one embodiment, the first node device A00 is a vehicle-mounted communication device.

As one embodiment, the first node device A00 is conventional user equipment.

As one embodiment, the first node device A00 is UE supporting a configuration related to full-duplex operations.

As one embodiment, the first receiver A01 comprises at least one of an antenna 452, a receiving device 454, a multi-antenna receiving processor 458, a receiving processor 456, a controller/processor 459, a memory 460, and a data source 467 in FIG. 4 of the present application.

As one embodiment, the first receiver A01 comprises at least the first five of the antenna 452, the receiving device 454, the multi-antenna receiving processor 458, the receiving processor 456, the controller/processor 459, the memory 460, and the data source 467 in FIG. 4 of the present application.

As one embodiment, the first receiver A01 comprises at least the first four of the antenna 452, the receiving device 454, the multi-antenna receiving processor 458, the receiving processor 456, the controller/processor 459, the memory 460, and the data source 467 in FIG. 4 of the present application.

As one embodiment, the first receiver A01 comprises at least the first three of the antenna 452, the receiving device 454, the multi-antenna receiving processor 458, the receiving processor 456, the controller/processor 459, the memory 460, and the data source 467 in FIG. 4 of the present application.

As one embodiment, the first receiver A01 comprises at least the first two of the antenna 452, the receiving device 454, the multi-antenna receiving processor 458, the receiving processor 456, the controller/processor 459, the memory 460, and the data source 467 in FIG. 4 of the present application.

As one embodiment, the first transmitter A02 comprises at least one of the antenna 452, a transmitting device 454, a multi-antenna transmitting device processor 457, a transmitting processor 468, the controller/processor 459, the memory 460, and the data source 467 in FIG. 4 of the present application.

As one embodiment, the first transmitter A02 comprises at least the first five of the antenna 452, the transmitting device 454, the multi-antenna transmitting device processor 457, the transmitting processor 468, the controller/processor 459, the memory 460, and the data source 467 in FIG. 4 of the present application.

As one embodiment, the first transmitter A02 comprises at least the first four of the antenna 452, the transmitting device 454, the multi-antenna transmitting device processor 457, the transmitting processor 468, the controller/processor 459, the memory 460, and the data source 467 in FIG. 4 of the present application.

As one embodiment, the first transmitter A02 comprises at least the first three of the antenna 452, the transmitting device 454, the multi-antenna transmitting device processor 457, the transmitting processor 468, the controller/processor 459, the memory 460, and the data source 467 in FIG. 4 of the present application.

As one embodiment, the first transmitter A02 comprises at least the first two of the antenna 452, the transmitting device 454, the multi-antenna transmitting device processor 457, the transmitting processor 468, the controller/processor 459, the memory 460, and the data source 467 in FIG. 4 of the present application.

As one embodiment, the first receiver A01 receives first RRC signaling and a first information block, at least one symbol being indicated to be a downlink symbol by the first RRC signaling; the first receiver A01 receives first signaling in a first PDCCH, wherein the first signaling comprises G bit sets, a first bit set is one of the G bit sets, and G is a positive integer greater than 1, wherein the G bit sets are mapped to G symbol groups on a one-to-one basis, and a first symbol group is a symbol group, to which the first bit set is mapped, among the G symbol groups; a condition that a first-type transmission, which occupies at least one symbol in the first symbol group, is cancelled is based on at least one bit in the first bit set, wherein the first-type transmission is an uplink transmission; any one of the G symbol groups comprises at least one first-type symbol, and whether at least one symbol, which is indicated to be a downlink symbol by the first RRC signaling, belongs to the first-type symbol depends on the first information block; and the first PDCCH is used for determining the G symbol groups.

As one embodiment, T symbols are divided into the G symbol groups, the T symbols all belong to the first-type symbol, the first PDCCH is used for determining a first symbol in the T symbols, and T is configurable.

As one embodiment, the first symbol in the T symbols is determined to be a first symbol after a first duration from the end of the first PDCCH, and the first duration is related to a PUSCH preparation time.

As one embodiment, the first RRC signaling is tdd-UL-DL-ConfigurationCommon.

As one embodiment, the first signaling is a DCI format 2_4.

As one embodiment, a target uplink transmission belongs to the first-type transmission and the first symbol group comprises one symbol occupied by the target uplink transmission; when a first condition is satisfied, the target uplink transmission is cancelled; and the first condition comprises: the first bit set comprises at least one bit with a value of 1.

As one embodiment, the target uplink transmission is a PUSCH transmission or an SRS transmission.

As one embodiment, the first-type symbol is a symbol other than a second-type symbol; a symbol other than a symbol configured to be available for an uplink transmission by the first information block and indicated to be a downlink symbol by the first RRC signaling belongs to the second-type symbol.

As one embodiment, a symbol configured to be available for an uplink transmission by the first information block and indicated to be a downlink symbol by the first RRC signaling belongs to the first-type symbol.

As one embodiment, a symbol configured to be available for a full-duplex operation by the first information block and indicated to be a downlink symbol by the first RRC signaling belongs to the first-type symbol.

As one embodiment, when a first node determines not to cancel the target uplink transmission, the first transmitter A02 transmits data or signals through the target uplink transmission.

## Embodiment 12

Embodiment 12 illustrates one structural block diagram of a processing apparatus in a second node device, as shown in FIG. 12. In FIG. 12, a processing apparatus B00 of the second node device comprises a second transmitter B01 and a second receiver B02.

As one embodiment, a second node device B00 is a base station.

As one embodiment, the second node device B00 is a satellite device.

As one embodiment, the second node device B00 is a relay node.

As one embodiment, the second node device B00 is a base station supporting full-duplex operations.

As one embodiment, the second node device B00 is a base station only supporting half-duplex operations.

As one embodiment, the second node device B00 is one of a test apparatus, test equipment, and a test instrument.

As one embodiment, the second transmitter B01 comprises at least one of an antenna 420, a transmitting device 418, a multi-antenna transmitting processor 471, a transmitting processor 416, a controller/processor 475, and a memory 476 in FIG. 4 of the present application.

As one embodiment, the second transmitter B01 comprises at least the first five of the antenna 420, the transmitting device 418, the multi-antenna transmitting processor 471, the transmitting processor 416, the controller/processor 475, and the memory 476 in FIG. 4 of the present application.

As one embodiment, the second transmitter B01 comprises at least the first four of the antenna 420, the transmitting device 418, the multi-antenna transmitting processor 471, the transmitting processor 416, the controller/processor 475, and the memory 476 in FIG. 4 of the present application.

As one embodiment, the second transmitter B01 comprises at least the first three of the antenna 420, the transmitting device 418, the multi-antenna transmitting processor 471, the transmitting processor 416, the controller/processor 475, and the memory 476 in FIG. 4 of the present application.

As one embodiment, the second transmitter B01 comprises at least the first two of the antenna 420, the transmitting device 418, the multi-antenna transmitting processor 471, the transmitting processor 416, the controller/processor 475, and the memory 476 in FIG. 4 of the present application.

As one embodiment, the second receiver B02 comprises at least one of the antenna 420, a receiving device 418, a multi-antenna receiving processor 472, a receiving processor 470, the controller/processor 475, and the memory 476 in FIG. 4 of the present application.

As one embodiment, the second receiver B02 comprises at least the first five of the antenna 420, the receiving device 418, the multi-antenna receiving processor 472, the receiving processor 470, the controller/processor 475, and the memory 476 in FIG. 4 of the present application.

As one embodiment, the second receiver B02 comprises at least the first four of the antenna 420, the receiving device 418, the multi-antenna receiving processor 472, the receiving processor 470, the controller/processor 475, and the memory 476 in FIG. 4 of the present application.

As one embodiment, the second receiver B02 comprises at least the first three of the antenna 420, the receiving device 418, the multi-antenna receiving processor 472, the receiving processor 470, the controller/processor 475, and the memory 476 in FIG. 4 of the present application.

As one embodiment, the second receiver B02 comprises at least the first two of the antenna 420, the receiving device 418, the multi-antenna receiving processor 472, the receiving processor 470, the controller/processor 475, and the memory 476 in FIG. 4 of the present application.

As one embodiment, the second transmitter B01 sends first RRC signaling and a first information block, at least one symbol being indicated to be a downlink symbol by the first RRC signaling; the second transmitter B01 sends first signaling in a first PDCCH, wherein the first signaling comprises G bit sets, a first bit set is one of the G bit sets, and G is a positive integer greater than 1, wherein the G bit sets are mapped to G symbol groups on a one-to-one basis, and a first symbol group is a symbol group, to which the first bit set is mapped, among the G symbol groups; a condition that a first-type transmission, which occupies at least one symbol in the first symbol group, is cancelled is based on at least one bit in the first bit set, wherein the first-type transmission is an uplink transmission; any one of the G symbol groups comprises at least one first-type symbol, and whether at least one symbol, which is indicated to be a downlink symbol by the first RRC signaling, belongs to the first-type symbol depends on the first information block; and the first PDCCH is used for determining the G symbol groups.

As one embodiment, T symbols are divided into the G symbol groups, the T symbols all belong to the first-type symbol, the first PDCCH is used for determining a first symbol in the T symbols, and T is configurable.

As one embodiment, the first symbol in the T symbols is determined to be a first symbol after a first duration from the end of the first PDCCH, and the first duration is related to a PUSCH preparation time.

As one embodiment, the first RRC signaling is tdd-UL-DL-ConfigurationCommon.

As one embodiment, the first signaling is a DCI format 2_4.

As one embodiment, a target uplink transmission belongs to the first-type transmission and the first symbol group comprises one symbol occupied by the target uplink transmission; when a first condition is satisfied, the target uplink transmission is cancelled; and the first condition comprises: the first bit set comprises at least one bit with a value of 1.

As one embodiment, the target uplink transmission is a PUSCH transmission or an SRS transmission.

As one embodiment, the first-type symbol is a symbol other than a second-type symbol; a symbol other than a symbol configured to be available for an uplink transmission by the first information block and indicated to be a downlink symbol by the first RRC signaling belongs to the second-type symbol.

As one embodiment, a symbol configured to be available for an uplink transmission by the first information block and indicated to be a downlink symbol by the first RRC signaling belongs to the first-type symbol.

As one embodiment, a symbol configured to be available for a full-duplex operation by the first information block and indicated to be a downlink symbol by the first RRC signaling belongs to the first-type symbol.

As one embodiment, when a second node determines that the target uplink transmission is not cancelled, the second receiver B02 executes reception for the target uplink transmission.

Those of ordinary skill in the art can understand that all or part of the steps in the above method can be completed by instructing relevant hardware through a program, and the program can be stored in a computer-readable storage medium, such as a read-only memory, a hard disk or an optical disk. Optionally, all or part of the steps in the above embodiments can also be implemented using one or more integrated circuits. Accordingly, each module unit in the above embodiments can be implemented in the form of hardware or in the form of a software function module. The present application is not limited to any specific form of software and hardware combinations. A first node device in the present application includes but is not limited to mobile phones, tablet computers, notebook computers, network access cards, low-power-consumption devices, eMTC devices, NB-IoT devices, vehicle-mounted communication devices, aircrafts, airplanes, drones, remote-controlled airplanes and other wireless communication devices. The second node device in the present application includes but is not limited to mobile phones, tablet computers, notebook computers, network access cards, low-power-consumption devices, eMTC devices, NB-IoT devices, vehicle-mounted communication devices, aircrafts, airplanes, drones, remote-controlled airplanes and other wireless communication devices. The user equipment or UE or terminal in the present application includes but is not limited to mobile phones, tablet computers, notebook computers, network access cards, low-power-consumption devices, eMTC devices, NB-IoT devices, vehicle-mounted communication devices, aircrafts, airplanes, drones, remote-controlled airplanes and other wireless communication devices. The base station device or base station or network-side device in the present application includes but is not limited to macrocellular base stations, microcellular base stations, femtocells, relay base stations, eNBs, gNBs, transmitter receiver points (TRPs), GNSS, relay satellites, satellite base stations, air base stations, test apparatuses, test equipment, test instruments and other devices.

Those skilled in the art should understand that the present invention can be implemented in other specified forms without departing from its core or basic features. Therefore, the embodiments disclosed at present should be regarded as descriptive rather than restrictive in any way. The scope of the invention is determined by the appended claims rather than the foregoing description, and all modifications within their equivalent meanings and areas are considered to be comprised therein.

**Claims**

1. A first node for wireless communications, comprising:

    a first receiver receiving first RRC signaling and a first information block, wherein at least one symbol is indicated to be a downlink symbol by the first RRC signaling; and
    the first receiver receiving first signaling in a first PDCCH, wherein the first signaling comprises G bit sets, a first bit set is one of the G bit sets, and G is a positive integer greater than 1,
    wherein the G bit sets are mapped to G symbol groups on a one-to-one basis, and a first symbol group is a symbol group, to which the first bit set is mapped, among the G symbol groups; a condition that a first-type transmission, which occupies at least one symbol in the first symbol group, is cancelled is based on at least one bit in the first bit set, wherein the first-type transmission is an uplink transmission; any one of the G symbol groups comprises at least one first-type symbol, and whether at least one symbol, which is indicated to be a downlink symbol by the first RRC signaling, belongs to a first-type symbol depends on the first information block; and the first PDCCH is used for determining the G symbol groups.

2. The first node according to claim 1, wherein T symbols are divided into the G symbol groups, the T symbols all belong to the first-type symbol, the first PDCCH is used for determining the T symbols, and T is a positive integer greater than 1.

3. The first node according to claim 2, wherein a first symbol in the T symbols is determined to be a first symbol after a first duration from the end of the first PDCCH, and the first duration is related to a PUSCH preparation time.

4. The first node according to any one of claims 1 to 3, wherein the first RRC signaling comprises tdd-UL-DL-ConfigurationCommon, and the first signaling is a DCI format 2_4.

5. The first node according to any one of claims 1 to 4, wherein a target uplink transmission belongs to the first-type transmission and the first symbol group comprises one symbol occupied by the target uplink transmission; when a first condition is satisfied, the target uplink transmission is cancelled; and the first condition comprises: the first bit set comprises at least one bit with a value of 1.

6. The first node according to claim 5, wherein the target uplink transmission is a PUSCH transmission or an SRS transmission.

7. The first node according to any one of claims 1 to 6, wherein a symbol configured to be available for the uplink transmission by the first information block and indicated to be a downlink symbol by the first RRC signaling belongs to the first-type symbol.

8. A second node for wireless communications, comprising:

a second transmitter sending first RRC signaling and a first information block, wherein at least one symbol is indicated to be a downlink symbol by the first RRC signaling; and
the second transmitter sending first signaling in a first PDCCH, wherein the first signaling comprises G bit sets, a first bit set is one of the G bit sets, and G is a positive integer greater than 1, wherein the G bit sets are mapped to G symbol groups on a one-to-one basis, and a first symbol group is a symbol group, to which the first bit set is mapped, among the G symbol groups; a condition that a first-type transmission, which occupies at least one symbol in the first symbol group, is cancelled is based on at least one bit in the first bit set, wherein the first-type transmission is an uplink transmission; any one of the G symbol groups comprises at least one first-type symbol, and whether at least one symbol, which is indicated to be a downlink symbol by the first RRC signaling, belongs to a first-type symbol depends on the first information block; and the first PDCCH is used for determining the G symbol groups.

9. The second node according to claim 8, wherein T symbols are divided into the G symbol groups, the T symbols all belong to the first-type symbol, the first PDCCH is used for determining the T symbols, and T is a positive integer greater than 1.

10. The second node according to claim 9, wherein a first symbol in the T symbols is determined to be a first symbol after a first duration from the end of the first PDCCH, and the first duration is related to a PUSCH preparation time.

11. The second node according to any one of claims 8 to 10, wherein the first RRC signaling comprises tdd-UL-DL-ConfigurationCommon, and the first signaling is a DCI format 2_4.

12. The second node according to any one of claims 8 to 11, wherein a target uplink transmission belongs to the first-type transmission and the first symbol group comprises one symbol occupied by the target uplink transmission; when a first condition is satisfied, the target uplink transmission is cancelled; and the first condition comprises: the first bit set comprises at least one bit with a value of 1.

13. The second node according to claim 12, wherein the target uplink transmission is a PUSCH transmission or an SRS transmission.

14. The second node according to any one of claims 8 to 13, wherein a symbol configured to be available for the uplink transmission by the first information block and indicated to be a downlink symbol by the first RRC signaling belongs to the first-type symbol.

15. A method used in a first node for wireless communications, comprising:

receiving first RRC signaling and a first information block, wherein at least one symbol is indicated to be a downlink symbol by the first RRC signaling; and
receiving first signaling in a first PDCCH, wherein the first signaling comprises G bit sets, a first bit set is one of the G bit sets, and G is a positive integer greater than 1, wherein the G bit sets are mapped to G symbol groups on a one-to-one basis, and a first symbol group is a symbol group, to which the first bit set is mapped, among the G symbol groups; a condition that a first-type transmission, which occupies at least one symbol in the first symbol group, is cancelled is based on at least one bit in the first bit set, wherein the first-type transmission is an uplink transmission; any one of the G symbol groups comprises at least one first-type symbol, and whether at least one symbol, which is indicated to be a downlink symbol by the first RRC signaling, belongs to a first-type symbol depends on the first information block; and the first PDCCH is used for determining the G symbol groups.

16. The method used in a first node according to claim 15, wherein T symbols are divided into the G symbol groups, the T symbols all belong to the first-type symbol, the first PDCCH is used for determining the T symbols, and T is a positive integer greater than 1.

17. The method used in a first node according to claim 16, wherein a first symbol in the T symbols is determined to be a first symbol after a first duration from the end of the first PDCCH, and the first duration is related to a PUSCH preparation time.

18. The method used in a first node according to any one of claims 15 to 17, wherein the first RRC signaling comprises tdd-UL-DL-ConfigurationCommon, and the first signaling is a DCI format 2_4.

19. The method used in a first node according to any one of claims 15 to 18, wherein a target uplink transmission belongs to the first-type transmission and the first symbol group comprises one symbol occupied by the target uplink transmission; when a first condition is satisfied, the target uplink transmission is cancelled; and the first condition comprises: the first bit set comprises at least one bit with a value of 1.

20. The method used in a first node according to claim 19, wherein the target uplink transmission is a PUSCH transmission or an SRS transmission.

21. The method used in a first node according to any one of claims 15 to 20, wherein a symbol configured to be available for the uplink transmission by the first information block and indicated to be a downlink symbol by the first RRC signaling belongs to the first-type symbol.

22. A method used in a second node for wireless communications, comprising:

sending first RRC signaling and a first information block, wherein at least one symbol is indicated to be a downlink symbol by the first RRC signaling; and
sending first signaling in a first PDCCH, wherein the first signaling comprises G bit sets, a first bit set is one of the G bit sets, and G is a positive integer greater than 1,
wherein the G bit sets are mapped to G symbol groups on a one-to-one basis, and a first symbol group is a symbol group, to which the first bit set is mapped, among the G symbol groups; a condition that a first-type transmission, which occupies at least one symbol in the first symbol group, is cancelled is based on at least one bit in the first bit set, wherein the first-type transmission is an uplink transmission; any one of the G symbol groups comprises at least one first-type symbol, and whether at least one symbol, which is indicated to be a downlink symbol by the first RRC signaling, belongs to a first-type symbol depends on the first information block; and the first PDCCH is used for determining the G symbol groups.

23. The method used in a second node according to claim 22, wherein T symbols are divided into the G symbol groups, the T symbols all belong to the first-type symbol, the first PDCCH is used for determining the T symbols, and T is a positive integer greater than 1.

24. The method used in a second node according to claim 23, wherein a first symbol in the T symbols is determined to be a first symbol after a first duration from the end of the first PDCCH, and the first duration is related to a PUSCH preparation time.

25. The method used in a second node according to any one of claims 22 to 24, wherein the first RRC signaling comprises tdd-UL-DL-ConfigurationCommon, and the first signaling is a DCI format 2_4.

26. The method used in a second node according to any one of claims 22 to 25, wherein a target uplink transmission belongs to the first-type transmission and the first symbol group comprises one symbol occupied by the target uplink transmission; when a first condition is satisfied, the target uplink transmission is cancelled; and the first condition comprises: the first bit set comprises at least one bit with a value of 1.

27. The method used in a second node according to claim 26, wherein the target uplink transmission is a PUSCH transmission or an SRS transmission.

28. The method used in a second node according to any one of claims 22 to 27, wherein a symbol configured to be available for the uplink transmission by the first information block and indicated to be a downlink symbol by the first RRC signaling belongs to the first-type symbol.

100

First node

101

Receive first RRC signaling
and a first information block

102

Receive first signaling in
a first PDCCH

FIG. 1

EPS 200

NR-RAN
202

UE 201

NR Node B 203

Other NR
Nodes B 204

HSS 220

MME/AMF/
UPF 211

Other
MME/AMF/UPF 214

S-GW 212

P-GW 213

5G-CN/EPC
210

Internet
service 230

FIG. 2

Control plane
300

| L3 | | RRC | 306 |
| 305 | L2 | PDCP | 304 |
| | | RLC | 303 |
| | | MAC | 302 |
| L1 | | PHY | 301 |

User plane
350

| | SDAP | 356 |
| 355 L2 | PDCP | 354 |
| | RLC | 353 |
| | MAC | 352 |
| L1 | PHY | 351 |

FIG. 3

FIG. 4

U2. Second node

S521. Send first RRC signaling and a first information block

First RRC signaling and first information block

U1. First node

S511. Receive the first RRC signaling and the first information block

S522. Send second signaling

Second signaling

F1. Optional

S512. Receive the second signaling

S523. Send first signaling in a first PDCCH

First signaling

S513. Receive the first signaling in the first PDCCH

End

End

FIG. 5

G symbol groups ← Are divided into — T symbols — A first symbol in the T symbols depends on → A first PDCCH

FIG. 6

FIG. 7

FIG. 8

FIG. 9

| When a first condition is satisfied | A target uplink transmission is cancelled |
|---|---|

| The first condition | —Comprises→ | A first bit set comprises at least one bit with a value of 1 |
|---|---|---|

FIG. 10

First node device ⌐ A00

First receiver A01

⇅

First transmitter A02

FIG. 11

Second node device ⌐ B00

Second transmitter B01

⇅

Second receiver B02

FIG. 12

## INTERNATIONAL SEARCH REPORT

International application No.

**PCT/CN2024/095645**

### A. CLASSIFICATION OF SUBJECT MATTER

H04L 5/00(2006.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, VEN, USTXT, WOTXT, EPTXT, CNKI, 3GPP: 准备时间, 取消, 格式, 重叠, 冲突, PDCCH, PUSCH, RRC, preparation time, tdd UL DL configurationcommon, DCI, format 2_4, overlap, conflict

### C. DOCUMENTS CONSIDERED TO BE RELEVANT

| Category* | Citation of document, with indication, where appropriate, of the relevant passages | Relevant to claim No. |
|---|---|---|
| X | CN 115699636 A (LENOVO (UNITED STATES) INC.) 03 February 2023 (2023-02-03) description, paragraphs [0009]-[0054] and [0090], and figures 2 and 4 | 1-28 |
| X | VIVO. "Enhancement for Scheduling/HARQ" *3GPP TSG RAN WG1 #102-E, R1-2005350*, 08 August 2020 (2020-08-08), sections 1-6 | 1-28 |
| A | US 2022225360 A1 (OFINNO, LLC) 14 July 2022 (2022-07-14) entire document | 1-28 |
| A | US 2023043851 A1 (SHARP K.K.) 09 February 2023 (2023-02-09) entire document | 1-28 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 August 2024** | **24 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 723 528 A1

| INTERNATIONAL SEARCH REPORT | | International application No. |
|---|---|---|
| Information on patent family members | | **PCT/CN2024/095645** |

| Patent document cited in search report | | | Publication date (day/month/year) | Patent family member(s) | | | Publication date (day/month/year) |
|---|---|---|---|---|---|---|---|
| CN | 115699636 | A | 03 February 2023 | US | 2023189255 | A1 | 15 June 2023 |
| | | | | EP | 4150812 | A1 | 22 March 2023 |
| | | | | WO | 2021231507 | A1 | 18 November 2021 |
| US | 2022225360 | A1 | 14 July 2022 | US | 12016016 | B2 | 18 June 2024 |
| US | 2023043851 | A1 | 09 February 2023 | | None | | |

Form PCT/ISA/210 (patent family annex) (July 2022)